(19) Europäisches Patentamt

European Patent Office

Office européen des brevets

(11) **EP 4 757 195 A1**

(12) **EUROPEAN PATENT APPLICATION**
published in accordance with Art. 153(4) EPC

(43) Date of publication:
**10.06.2026 Bulletin 2026/24**

(21) Application number: **23947181.6**

(22) Date of filing: **03.08.2023**

(51) International Patent Classification (IPC):
**H04B 7/0456** (2017.01)    **H04W 52/04** (2009.01)

(52) Cooperative Patent Classification (CPC):
**H04B 7/0456; H04W 52/04; H04W 72/1268; H04W 72/21**

(86) International application number:
**PCT/CN2023/111108**

(87) International publication number:
**WO 2025/025237 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHANG, Zhenyu**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **CODEBOOK INDICATION METHOD, TERMINAL, AND NETWORK DEVICE**

(57) The present invention relates to a codebook indication method, a terminal, and a network device. The method executed by a terminal comprises: determining a codebook, wherein at least one codeword in the codebook supports full-power uplink transmission of the terminal, and the terminal supports 8-port partially coherent transmission. Thus, full-power uplink transmission of the terminal can be achieved, the transmission power of the terminal can be improved, and the uplink transmission performance is improved.

FIG. 3

## Description

## TECHNICAL FIELD

The disclosure relates to the field of communication technologies, and in particular to a method for indicating a codebook, a terminal, and a network device.

## BACKGROUND

In the related art, uplink 8-port transmission is provided, in which a terminal supports the uplink 8-port transmission.

## SUMMARY

The method for indicating a codebook, the terminal, and the network device provided in embodiments of the disclosure are used to solve the problem that a terminal supporting 8-port partial coherent transmission does not support full-power transmission when an 8-port partial coherent codebook is used for transmission of an uplink signal or an uplink channel.

Embodiments of the disclosure provide a method for indicating a codebook, a terminal, and a network device.

According to a first aspect of embodiments of the disclosure, a method for indicating a codebook is provided. The method is performed by a terminal, including: determining a codebook, in which at least one codeword in the codebook supports full-power uplink transmission by the terminal, and the terminal supports 8-port partial coherent transmission.

In the above embodiment, the terminal may receive indication information sent from the network device and determine the codebook. In a case that the at least one codeword in the codebook supports full-power transmission of the uplink signal or channel by the terminal, the terminal may achieve the full-power transmission of the uplink signal or channel. This may increase the transmission power of the terminal and improve the uplink transmission performance.

According to a second aspect of embodiments of the disclosure, a method for indicating a codebook is provided. The method is performed by a network device, including: determining a codebook for a terminal, in which at least one codeword in the codebook supports full-power uplink transmission by the terminal, and the terminal supports 8-port partial coherent transmission.

In the above embodiment, the network device may configure the codebook for the terminal supporting the 8-port partial coherent transmission, and the at least one codeword in the codebook supports the full-power uplink transmission by the terminal. This may achieve the full-power uplink transmission by the terminal, increase the transmission power of the terminal and improve the uplink transmission performance.

According to a third aspect of embodiments of the disclosure, a method for indicating a codebook is provided. The method includes: determining, by a network device, a codebook for a terminal; and determining, by a terminal, a codebook, in which at least one codeword in the codebook supports full-power uplink transmission by the terminal, and the terminal supports 8-port partial coherent transmission.

In the above embodiment, the terminal may achieve the full-power uplink transmission. This may increase the transmission power of the terminal and improve the uplink transmission performance.

According to a fourth aspect of embodiments of the disclosure, a terminal is provided. The terminal includes: a processing module, configured to determine a codebook, in which at least one codeword in the codebook supports full-power uplink transmission by the terminal, and the terminal supports 8-port partial coherent transmission.

According to a fifth aspect of embodiments of the disclosure, a network device is provided. The network device includes: a processing module, configured to determine a codebook for a terminal, in which at least one codeword in the codebook supports full-power uplink transmission by the terminal, and the terminal supports 8-port partial coherent transmission.

According to a sixth aspect of embodiments of the disclosure, a terminal is provided. The terminal includes: one or more processors, in which the terminal is configured to perform the method according to the first aspect.

According to a seventh aspect of embodiments of the disclosure, a network device is provided. The network device includes: one or more processors, in which the network device is configured to perform the method according to the second aspect.

According to an eighth aspect of embodiments of the disclosure, a communication system is provided. The communication system includes: a terminal, configured to perform the method according to the first aspect, and a network device, perform the method according to the second aspect.

According to a ninth aspect of embodiments of the disclosure, a storage medium is provided. The storage medium stores instructions which, when executed on a communication device, cause the communication device to perform the method according to the first aspect or the second aspect.

## BRIEF DESCRIPTION OF THE DRAWINGS

FIG. 1 is a schematic diagram illustrating an architecture of a communication system according to an embodiment of the disclosure.

FIG. 2 is a schematic diagram illustrating division of an antenna port group with 8 ports according to an embodiment of the disclosure.

FIG. 3 is a flowchart illustrating a method for indicating a codebook according to an embodiment of the disclosure.

FIG. 4A is a flowchart illustrating another method for indicating a codebook according to an embodiment of the disclosure.

FIG. 4B is a flowchart illustrating another method for indicating a codebook according to an embodiment of the disclosure.

FIG. 5A is a flowchart illustrating another method for indicating a codebook according to an embodiment of the disclosure.

FIG. 5B is a flowchart illustrating another method for indicating a codebook according to an embodiment of the disclosure.

FIG. 6A is a block diagram illustrating a terminal according to an embodiment of the disclosure.

FIG. 6B is a block diagram illustrating a network device according to an embodiment of the disclosure.

FIG. 7A is a block diagram illustrating a communication device according to an embodiment of the disclosure.

FIG. 7B is a block diagram illustrating a chip according to an embodiment of the disclosure.

## DETAILED DESCRIPTION

Embodiments of the disclosure provide a method for indicating a codebook, a terminal, and a network device.

In a first aspect, embodiments of the disclosure provide a method for indicating a codebook. The method is performed by a terminal, including: determining a codebook, in which at least one codeword in the codebook supports full-power uplink transmission by the terminal, and the terminal supports 8-port partial coherent transmission.

In the above embodiments, the terminal may determine the codebook. In a case that the at least one codeword in the codebook supports the full-power transmission of the uplink signal or channel by the terminal, the terminal may achieve the full-power transmission of the uplink signal or channel. This may increase the transmission power of the terminal and improve the uplink transmission performance.

In some embodiments in combination with the first aspect, in some embodiments, determining the codebook by the terminal includes: receiving indication information sent from a network device, in which the indication information indicates the codebook; and determining the codebook based on the indication information.

In the above embodiments, the terminal may receive the indication information sent from the network device and determine the codebook. In a case that the at least one codeword in the codebook supports full-power transmission of the uplink signal or channel by the terminal, the terminal may achieve the full-power transmission of the uplink signal or channel. This may increase the transmission power of the terminal and improve the uplink transmission performance.

In some embodiments in combination with the first aspect, in some embodiments, the terminal supports 8-port partial coherent transmission with 2 antenna port groups and 1 transmission layer, and/or 8-port partial coherent transmission with 4 antenna port groups and any one of 1 to 3 transmission layers.

In the above embodiments, the terminal supporting the 8-port partial coherent transmission with 2 antenna port groups and 1 transmission layer may determine the codebook, and the at least one codeword in the codebook supports full-power transmission of the uplink signal or channel by the terminal, so that the terminal supporting the 8-port partial coherent transmission with 2 antenna port groups and 1 transmission layer may achieve the full-power transmission of the uplink signal or channel, which may increase the transmission power of the terminal and improve the uplink transmission performance; and/or the terminal supporting the 8-port partial coherent transmission with 4 antenna port groups and any one of 1 to 3 transmission layers may determine the codebook, and the at least one codeword in the codebook supports full-power transmission of the uplink signal or channel by the terminal, so that the terminal supporting the 8-port partial coherent transmission with 4 antenna port groups and any one of 1 to 3 transmission layers may achieve the full-power transmission of the uplink signal or channel., which may increase the transmission power of the terminal and improve the uplink transmission performance.

In some embodiments in combination with the first aspect, in some embodiments, the terminal sends capability information to the network device, in which the capability information indicates that the terminal supports the 8-port partial coherent transmission with 2 antenna port groups and 1 transmission layer, and/or the 8-port partial coherent transmission with 4 antenna port groups and any one of 1 to 3 transmission layers.

In the above embodiments, the terminal may report the capability information, so that the network device may configure the codebook based on the capability information of the terminal, thus improving the communication reliability.

In some embodiments in combination with the first aspect, in some embodiments, determining the codebook by the terminal includes at least one of:

determining that the codebook is an 8-port partial coherent codebook with 2 antenna port groups and 1 transmission layer to which all 8-port fully coherent codewords with 1 transmission layer are added, in which the terminal supports 8-port partial coherent transmission with 2 antenna port groups and 1 transmission layer;

determining that the codebook is an 8-port partial coherent codebook with 4 antenna port groups and 1 transmission layer to which all the 8-port fully coherent codewords with 1 transmission layer are added, in which the terminal supports 8-port partial coherent transmission with 4 antenna port groups and 1 transmission layer;

determining that the codebook is an 8-port partial coherent codebook with 4 antenna port groups and 2 transmission layers to which all 8-port fully coherent codewords with 2 transmission layers are added, in which the terminal supports 8-port partial coherent transmission with 4 antenna port groups and 2 transmission layers;

determining that the codebook is an 8-port partial coherent codebook with 4 antenna port groups and 3 transmission layers to which all 8-port fully coherent codewords with 3 transmission layers are added, in which the terminal supports 8-port partial coherent transmission with 4 antenna port groups and 3 transmission layers;

determining that the codebook is an 8-port partial coherent codebook with 2 antenna port groups and 1 transmission layer to which a first specific 8-port fully coherent codeword with 1 transmission layer is added, in which the terminal supports the 8-port partial coherent transmission with 2 antenna port groups and 1 transmission layer;

determining that the codebook is an 8-port partial coherent codebook with 4 antenna port groups and 1 transmission layer to which a second specific 8-port fully coherent codeword with 1 transmission layer is added, in which the terminal supports the 8-port partial coherent transmission with 4 antenna port groups and 1 transmission layer;

determining that the codebook is an 8-port partial coherent codebook with 4 antenna port groups and 2 transmission layers to which a second specific 8-port fully coherent codeword with 2 transmission layers is added, in which the terminal supports the 8-port partial coherent transmission with 4 antenna port groups and 2 transmission layers;

determining that the codebook is an 8-port partial coherent codebook with 4 antenna port groups and 3 transmission layers to which a second specific 8-port fully coherent codeword with 3 transmission layers is added, in which the terminal supports the 8-port partial coherent transmission with 4 antenna port groups and 3 transmission layers;

determining that the codebook is an 8-port partial coherent codebook with 4 antenna port groups and 2 transmission layers to which all 8-port partial coherent codewords with 2 transmission layers and 2 antenna port groups are added, in which the terminal supports the 8-port partial coherent transmission with 4 antenna port groups and 2 transmission layers;

determining that the codebook is an 8-port partial coherent codebook with 4 antenna port groups and 3 transmission layers to which all 8-port partial coherent codewords with 3 transmission layers and 2 antenna port groups are added, in which the terminal supports the 8-port partial coherent transmission with 4 antenna port groups and 3 transmission layers;

determining that the codebook is an 8-port partial coherent codebook with 4 antenna port groups and 2 transmission layers to which a specific 8-port partial coherent codeword with 2 transmission layers and 2 antenna port groups is added, in which the terminal supports the 8-port partial coherent transmission with 4 antenna port groups and 2 transmission layers; or

determining that the codebook is an 8-port partial coherent codebook with 4 antenna port groups and 3 transmission layers to which a specific 8-port partial coherent codeword with 3 transmission layers and 2 antenna port groups is added, in which the terminal supports the 8-port partial coherent transmission with 4 antenna port groups and 3 transmission layers.

In the above embodiments, the terminal may determine the codebook, which enables the terminal to use the at least one codeword in the codebook for the full-power uplink transmission. This may increase the transmission power of the terminal and improve the uplink transmission performance.

In some embodiments in combination with the first aspect, in some embodiments, the codebook includes at least one of:

an 8-port partial coherent codebook with 1 transmission layer and 2 antenna port groups, and all 8-port fully coherent codewords with 1 transmission layer, in which the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, in which the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, in which the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, in which the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, in which the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, in which the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, in which the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, in which the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, in which the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, in which the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, in which the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, in which the terminal supports the 8-port partial coherent transmission with 3 transmission layers and 4 antenna port groups.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 1 transmission layer and an antenna configuration of the terminal being a first configuration, the first specific 8-port fully coherent codeword includes at least one of:

a codeword determined when a first parameter, a second parameter, and a third parameter are all 0;

a codeword determined when a first parameter is 1, and a second parameter and a third parameter are all 0;

a codeword determined when a first parameter and a second parameter are all 0, and a third parameter is 1;

a codeword determined when a first parameter and a second parameter are all 0, and a third parameter is 2;

a codeword determined when a first parameter and a second parameter are all 0, and a third parameter is 3;

a codeword determined when a first parameter is 1, a second parameter is 0, and a third parameter is 1;

a codeword determined when a first parameter is 1, a second parameter is 0, and a third parameter is 2; or

a codeword determined when a first parameter is 1, a second parameter is 0, and a third parameter is 3,

in which the first configuration is that, in one polarization direction, a number of antenna ports in a horizontal dimension is 4 and a number of antenna ports in a vertical dimension is 1; and

the first parameter indicates a beam index selected in the horizontal dimension, the second parameter indicates a beam index selected in the vertical dimension, and the third parameter indicates a co-phasing coefficient between two polarization directions.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 1 transmission layer and an antenna configuration of the terminal being a second configuration, the first specific 8-port fully coherent codeword includes at least one of:

> a codeword determined when a first parameter, a second parameter, and a third parameter are all 0;
> a codeword determined when a first parameter is 1, and a second parameter and a third parameter are all 0;
> a codeword determined when a first parameter and a second parameter are all 0, and a third parameter is 1;
> a codeword determined when a first parameter and a second parameter are all 0, and a third parameter is 2;
> a codeword determined when a first parameter and a second parameter are all 0, and a third parameter is 3;
> a codeword determined when a first parameter is 1, a second parameter is 0, and a third parameter is 1;
> a codeword determined when a first parameter is 1, a second parameter is 0, and a third parameter is 2; or
> a codeword determined when a first parameter is 1, a second parameter is 0, and a third parameter is 3,
> in which the second configuration is that, in one polarization direction, a number of antenna ports in a horizontal dimension is 2 and a number of antenna ports in a vertical dimension is 2; and
> the first parameter indicates a beam index selected in the horizontal dimension, the second parameter indicates a beam index selected in the vertical dimension, and the third parameter indicates a co-phasing coefficient between two polarization directions.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 1 transmission layer and an antenna configuration of the terminal being a first configuration, the second specific 8-port fully coherent codeword includes at least one of:

> a codeword determined when a first parameter, a second parameter, and a third parameter are all 0;
> a codeword determined when the first parameter and the second parameter are all 0, and the third parameter is 1;
> a codeword determined when the first parameter and the second parameter are all 0, and the third parameter is 2; or
> a codeword determined when the first parameter and the second parameter are all 0, and the third parameter is 3,
> in which the first configuration is that, in one polarization direction, a number of antenna ports in a horizontal dimension is 4 and a number of antenna ports in a vertical dimension is 1; and
> the first parameter indicates a beam index selected in the horizontal dimension, the second parameter indicates a beam index selected in the vertical dimension, and the third parameter indicates a co-phasing coefficient between two polarization directions.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 1 transmission layer and an antenna configuration of the terminal being a second configuration, the second specific 8-port fully coherent codeword includes at least one of:

> a codeword determined when a first parameter, a second parameter, and a third parameter are all 0;
> a codeword determined when the first parameter and the second parameter are all 0, and the third parameter is 1;
> a codeword determined when the first parameter and the second parameter are all 0, and the third parameter is 2; or
> a codeword determined when the first parameter and the second parameter are all 0, and the third parameter is 3,
> in which the second configuration is that, in one polarization direction, a number of antenna ports in a horizontal dimension is 2 and a number of antenna ports in a vertical dimension is 2; and
> the first parameter indicates a beam index selected in the horizontal dimension, the second parameter indicates a beam index selected in the vertical dimension, and the third parameter indicates a co-phasing coefficient between two polarization directions.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 2 transmission layers, the second specific 8-port fully coherent codeword includes at least one of:

a codeword determined when a first parameter, a second parameter, a third parameter, and a fourth parameter are all 0; or

a codeword determined when the first parameter, the second parameter, and a fourth parameter are all 0, and the third parameter is 1,

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 3 transmission layers, the second specific 8-port fully coherent codeword includes at least one of:

a codeword determined when a first parameter, a second parameter, a third parameter, and a fourth parameter are all 0; or

a codeword determined when the first parameter, the second parameter, and the fourth parameter are all 0, and the third parameter is 1,

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 3 transmission layers, the second specific 8-port fully coherent codeword includes at least one of:

a codeword determined when a first parameter, a second parameter, and a third parameter are all 0, and a fourth parameter is 1; or

a codeword determined when the first parameter and the second parameter are all 0, and the third parameter and the fourth parameter are all 1,

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 2 transmission layers, the specific 8-port partial coherent codeword is related to a first codeword and a second codeword, a mapping relationship exists between values corresponding to ports in a first port group of a first layer of the specific 8-port partial coherent codeword and values corresponding to ports of the first codeword, and a mapping relationship exists between values corresponding to ports in a second port group of a second layer of the specific 8-port partial coherent codeword and values corresponding to ports of the second codeword;

in which the first codeword is a codeword with 4 antenna ports, 1 transmission layer, and a transmit precoding matrix indicator (TPMI) being a first specific value, the first specific value is at least one of 12 to 27; and the second codeword is a codeword with 4 antenna ports, 1 transmission layer, and a TPMI being a second specific value, the second specific value is at least one of 12 to 27;

the first port group is {0, 1, 4, 5}, and the second port group is {2, 3, 6, 7}.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, the first specific value is any one of a first value, a second value, a third value, or a fourth value; the second specific value is any one of the first value, the second value, the third value, or the fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, in a case that the first specific value is the first value, the second specific value is any one of the first value, the second value, the third value, or the fourth value;

in a case that the first specific value is the second value, the second specific value is any one of the second value, the third value, or the fourth value;
in a case that the first specific value is the third value, the second specific value is any one of the third value or the fourth value; or
in a case that the first specific value is the fourth value, the second specific value is the fourth value.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of the first codeword, a mapping relationship exists between values corresponding to ports in a second port group of a second layer of the specific 8-port partial coherent codeword and values corresponding to ports of a first layer of the third codeword, and a mapping relationship exists between values corresponding to ports in the second port group of a third layer of the specific 8-port partial coherent codeword and values corresponding to ports of a second layer of the third codeword; or

for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of a first layer of the third codeword, a mapping relationship exists between values corresponding to ports in a first port group of a second layer of the specific 8-port partial coherent codeword and values corresponding to ports of a second layer of the third codeword, and a mapping relationship exists between values corresponding to ports in a second port group of a third layer of the specific 8-port partial coherent codeword and values corresponding to ports of the first codeword;
in which the first codeword is a codeword with 4 antenna ports, 1 transmission layer, and a TPMI being a first specific value, the first specific value is at least one of 12 to 27; the third codeword is a codeword with 4 antenna ports, 2 transmission layers, and a TPMI being a third specific value, the third specific value includes at least one of 14 to 21; the first port group is {0, 1, 4, 5}, and the second port group is {2, 3, 6, 7}.

In the above embodiments, the terminal receives the codebook configured by the network device, which enables the terminal to use the at least one codeword in the codebook for the full-power uplink transmission. This may increase the transmission power of the terminal and improve the uplink transmission performance.

In some embodiments in combination with the first aspect, in some embodiments, the first specific value is any one of a first value, a second value, a third value, or a fourth value;

the first value is any one of 12, 16, 20, or 24;
the second value is any one of 13, 17, 21, or 25;
the third value is any one of 14, 18, 22, or 26; and

the fourth value is any one of 15, 19, 23, or 27;
the third specific value is any one of a fifth value or a sixth value;
the fifth value is any one of 14, 16, 18, or 20; and
the sixth value is any one of 15, 17, 19, or 21.

In the above embodiments, the terminal receives the codebook configured by the network device, which enables the terminal to use the at least one codeword in the codebook for the full-power uplink transmission. This may increase the transmission power of the terminal and improve the uplink transmission performance.

In a second aspect, embodiments of the disclosure provide a method for indicating a codebook. The method is performed by a network device, including: determining a codebook for a terminal, in which at least one codeword in the codebook supports full-power uplink transmission by the terminal, and the terminal supports 8-port partial coherent transmission.

In the above embodiments, the network device may determine the codebook for the terminal supporting the 8-port partial coherent transmission, the at least one codeword in the codebook supports the full-power uplink transmission by the terminal, and in a case that the network device sends the codebook to the terminal, the terminal may achieve the full-power uplink transmission. This may increase the transmission power of the terminal and improve the uplink transmission performance.

In some embodiments in combination with the second aspect, in some embodiments, the method further includes: sending indication information to the terminal, in which the indication information indicates the codebook.

In the above embodiments, the network device may configure the codebook for the terminal supporting the 8-port partial coherent transmission, and the at least one codeword in the codebook supports the full-power uplink transmission by the terminal. This may achieve the full-power uplink transmission by the terminal., increase the transmission power of the terminal and improve the uplink transmission performance.

In some embodiments in combination with the second aspect, in some embodiments, the terminal supports 8-port partial coherent transmission with 2 antenna port groups and 1 transmission layer, and/or 8-port partial coherent transmission with 4 antenna port groups and any one of 1 to 3 transmission layers.

In the above embodiments, the network device may configure the codebook for the terminal supporting the 8-port partial coherent transmission with 2 antenna port groups and 1 transmission layer and/or the terminal supporting the 8-port partial coherent transmission with 4 antenna port groups and any one of 1 to 3 transmission layers, and the at least one codeword in the codebook supports the full-power uplink transmission by the terminal. This may achieve the full-power uplink transmission by the terminal, increase the transmission power of the terminal and improve the uplink transmission performance.

In some embodiments in combination with the second aspect, in some embodiments, the network device receives capability information sent from the terminal, in which the capability information indicates that the terminal supports the 8-port partial coherent transmission with 2 antenna port groups and 1 transmission layer, and/or the 8-port partial coherent transmission with 4 antenna port groups and any one of 1 to 3 transmission layers.

In the above embodiments, the network device may receive the capability information reported by the terminal, and configure the codebook based on the capability information of the terminal, thus improving the communication reliability.

In some embodiments in combination with the second aspect, in some embodiments, determining, by the network device, the codebook for the terminal includes at least one of:

determining that the codebook is an 8-port partial coherent codebook with 2 antenna port groups and 1 transmission layer to which all 8-port fully coherent codewords with 1 transmission layer are added, in which the terminal supports 8-port partial coherent transmission with 2 antenna port groups and 1 transmission layer;
determining that the codebook is an 8-port partial coherent codebook with 4 antenna port groups and 1 transmission layer to which all the 8-port fully coherent codewords with 1 transmission layer are added, in which the terminal supports 8-port partial coherent transmission with 4 antenna port groups and 1 transmission layer;
determining that the codebook is an 8-port partial coherent codebook with 4 antenna port groups and 2 transmission layers to which all 8-port fully coherent codewords with 2 transmission layers are added, in which the terminal supports 8-port partial coherent transmission with 4 antenna port groups and 2 transmission layers;
determining that the codebook is an 8-port partial coherent codebook with 4 antenna port groups and 3 transmission layers to which all 8-port fully coherent codewords with 3 transmission layers are added, in which the terminal supports 8-port partial coherent transmission with 4 antenna port groups and 3 transmission layers;
determining that the codebook is an 8-port partial coherent codebook with 2 antenna port groups and 1 transmission layer to which a first specific 8-port fully coherent codeword with 1 transmission layer is added, in which the terminal supports the 8-port partial coherent transmission with 2 antenna port groups and 1 transmission layer;
determining that the codebook is an 8-port partial coherent codebook with 4 antenna port groups and 1 transmission layer to which a second specific 8-port fully coherent codeword with 1 transmission layer is added, in which the terminal supports the 8-port partial coherent transmission with 4 antenna port groups and 1 transmission layer; determining that the codebook is an 8-port partial coherent codebook with 4 antenna port groups and 2 transmission layers to which a second specific 8-port fully coherent codeword with 2 transmission layers is added, in which the terminal supports the 8-port partial coherent transmission with 4 antenna port groups and 2 transmission layers; determining that the codebook is an 8-port partial coherent codebook with 4 antenna port groups and 3 transmission layers to which a second specific 8-port fully coherent codeword with 3 transmission layers is added, in which the terminal supports the 8-port partial coherent transmission with 4 antenna port groups and 3 transmission layers; determining that the codebook is an 8-port partial coherent codebook with 4 antenna port groups and 2 transmission layers to which all 8-port partial coherent codewords with 2 transmission layers and 2 antenna port groups are added, in which the terminal supports the 8-port partial coherent transmission with 4 antenna port groups and 2 transmission layers; determining that the codebook is an 8-port partial coherent codebook with 4 antenna port groups and 3 transmission layers to which all 8-port partial coherent codewords with 3 transmission layers and 2 antenna port groups are added, in which the terminal supports the 8-port partial coherent transmission with 4 antenna port groups and 3 transmission layers; determining that the codebook is an 8-port partial coherent codebook with 4 antenna port groups and 2 transmission layers to which a specific 8-port partial coherent codeword with 2 transmission layers and 2 antenna port groups is added, in which the terminal supports the 8-port partial coherent transmission with 4 antenna port groups and 2 transmission layers; or determining that the codebook is an 8-port partial coherent codebook with 4 antenna port groups and 3 transmission layers to which a specific 8-port partial coherent codeword with 3 transmission layers and 2 antenna port groups is added, in which the terminal supports the 8-port partial coherent transmission with 4 antenna port groups and 3 transmission layers.

In the above embodiments, the network device may configure the codebook for the terminal, which enables the terminal to use the at least one codeword in the codebook for the full-power uplink transmission. This may increase the transmission power of the terminal and improve the uplink transmission performance.

In some embodiments in combination with the second aspect, in some embodiments, the codebook includes at least one of:

an 8-port partial coherent codebook with 1 transmission layer and 2 antenna port groups, and all 8-port fully coherent codewords with 1 transmission layer, in which the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, in which the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, in which the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, in which the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, in which the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, in which the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, in which the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, in which the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, in which the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, in which the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, in which the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, in which the terminal supports the 8-port partial coherent transmission with 3 transmission layers and 4 antenna port groups.

In some embodiments in combination with the second aspect, in some embodiments, for 1 transmission layer and an antenna configuration of the terminal being a first configuration, the first specific 8-port fully coherent codeword includes at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
in which the first configuration is that, in one polarization direction, a number of antenna ports in a horizontal dimension is 4 and a number of antenna ports in a vertical dimension is 1; and
the first parameter indicates a beam index selected in the horizontal dimension, the second parameter indicates a beam index selected in the vertical dimension, and the third parameter indicates a co-phasing coefficient between two polarization directions.

In some embodiments in combination with the second aspect, in some embodiments, for 1 transmission layer and an antenna configuration of the terminal being a second configuration, the first specific 8-port fully coherent codeword includes at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
in which the second configuration is that, in one polarization direction, a number of antenna ports in a horizontal dimension is 2 and a number of antenna ports in a vertical dimension is 2; and
the first parameter indicates a beam index selected in the horizontal dimension, the second parameter indicates a beam index selected in the vertical dimension, and the third parameter indicates a co-phasing coefficient between two polarization directions.

In some embodiments in combination with the second aspect, in some embodiments, for 1 transmission layer and an antenna configuration of the terminal being a first configuration, the second specific 8-port fully coherent codeword includes at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3,
in which the first configuration is that, in one polarization direction, a number of antenna ports in a horizontal dimension is 4 and a number of antenna ports in a vertical dimension is 1; and
the first parameter indicates a beam index selected in the horizontal dimension, the second parameter indicates a beam index selected in the vertical dimension, and the third parameter indicates a co-phasing coefficient between two polarization directions.

In some embodiments in combination with the second aspect, in some embodiments, for 1 transmission layer and an antenna configuration of the terminal being a second configuration, the second specific 8-port fully coherent codeword includes at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3,
in which the second configuration is that, in one polarization direction, a number of antenna ports in a horizontal dimension is 2 and a number of antenna ports in a vertical dimension is 2; and
the first parameter indicates a beam index selected in the horizontal dimension, the second parameter indicates a beam index selected in the vertical dimension, and the third parameter indicates a co-phasing coefficient between two polarization directions.

In some embodiments in combination with the second aspect, in some embodiments, for 2 transmission layers, the second specific 8-port fully coherent codeword includes at least one of:

a codeword determined when a first parameter, a second parameter, a third parameter, and a fourth parameter are all 0; or
a codeword determined when the first parameter, the second parameter, and a fourth parameter are all 0, and the third parameter is 1,
in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index

In some embodiments in combination with the second aspect, in some embodiments, for 3 transmission layers, the second specific 8-port fully coherent codeword includes at least one of:

a codeword determined when a first parameter, a second parameter, a third parameter, and a fourth parameter are all 0; or
a codeword determined when the first parameter, the second parameter, and the fourth parameter are all 0, and the third parameter is 1,
in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In some embodiments in combination with the second aspect, in some embodiments, for 3 transmission layers, the second specific 8-port fully coherent codeword includes at least one of:

a codeword determined when a first parameter, a second parameter, and a third parameter are all 0, and a fourth parameter is 1; or
a codeword determined when the first parameter and the second parameter are all 0, and the third parameter and the fourth parameter are all 1,
in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In some embodiments in combination with the second aspect, in some embodiments, for 2 transmission layers, the specific 8-port partial coherent codeword is related to a first codeword and a second codeword, a mapping relationship exists between values corresponding to ports in a first port group of a first layer of the specific 8-port partial coherent codeword and values corresponding to ports of the first codeword, and a mapping relationship exists between values corresponding to ports in a second port group of a second layer of the specific 8-port partial coherent codeword and values corresponding to ports of the second codeword;

in which the first codeword is a codeword with 4 antenna ports, 1 transmission layer, and a TPMI being a first specific value, the first specific value is at least one of 12 to 27; and the second codeword is a codeword with 4 antenna ports, 1 transmission layer, and a TPMI being a second specific value, the second specific value is at least one of 12 to 27; the first port group is {0, 1, 4, 5}, and the second port group is {2, 3, 6, 7}.

In some embodiments in combination with the second aspect, in some embodiments, the first specific value is any one of a first value, a second value, a third value, or a fourth value; the second specific value is any one of the first value, the second value, the third value, or the fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27.

In some embodiments in combination with the second aspect, in some embodiments, in a case that the first specific value is the first value, the second specific value is any one of the first value, the second value, the third value, or the fourth value;

in a case that the first specific value is the second value, the second specific value is any one of the second value, the third value, or the fourth value;
in a case that the first specific value is the third value, the second specific value is any one of the third value or the fourth value; or
in a case that the first specific value is the fourth value, the second specific value is the fourth value.

In some embodiments in combination with the second aspect, in some embodiments, for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of the first codeword, a mapping relationship exists between values corresponding to ports in a second port group of a second layer of the specific 8-port partial coherent codeword and values corresponding to ports of a first layer of the third codeword, and a mapping relationship exists between values corresponding to ports in the second port group of a third layer of the specific 8-port partial coherent codeword and values corresponding to ports of a second layer of the third codeword; or

for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of a first layer of the third codeword, a mapping relationship exists between values corresponding to ports in a first port group of a second layer of the specific 8-port partial coherent codeword and values corresponding to ports of a second layer of the third codeword, and a mapping relationship exists between values corresponding to ports in a second port group of a third layer of the specific 8-port partial coherent codeword and values corresponding to ports of the first codeword;
in which the first codeword is a codeword with 4 antenna ports, 1 transmission layer, and a TPMI being a first specific value, the first specific value is at least one of 12 to 27; the third codeword is a codeword with 4 antenna ports, 2 transmission layers, and a TPMI being a third specific value, the third specific value includes at least one of 14 to 21; the first port group is {0, 1, 4, 5}, and the second port group is {2, 3, 6, 7}.

In some embodiments in combination with the second aspect, in some embodiments, the first specific value is any one of a first value, a second value, a third value, or a fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27;
the third specific value is any one of a fifth value or a sixth value;
the fifth value is any one of 14, 16, 18, or 20; and
the sixth value is any one of 15, 17, 19, or 21.

In a third aspect, embodiments of the disclosure provide a method for indicating a codebook. The method includes: determining, by a network device, a codebook for a terminal, in which the terminal supports 8-port partial coherent transmission with 2 antenna port groups and 1 transmission layer, and/or 8-port partial coherent transmission with 4 antenna port groups and any one of 1 to 3 transmission layers; sending, by the network device, indication information to the terminal; and receiving, by the terminal, the indication information from the network device; the indication information indicates the codebook configured by the network device for the terminal; and at least one codeword in the codebook supports full-power uplink transmission by the terminal.

In the above embodiments, the terminal may receive the indication information sent from the network device and determine the codebook. In a case that the at least one codeword in the codebook supports the full-power uplink transmission by the terminal, the terminal may achieve the full-power uplink transmission. This may increase the transmission power of the terminal and improve the uplink transmission performance.

In a fourth aspect, embodiments of the disclosure provide a terminal. The terminal includes at least one of a transceiver module or a processing module, in which the terminal is configured to perform optional implementations of the first aspect.

In a fifth aspect, embodiments of the disclosure provide a network device. The network device includes at least one of a transceiver module or a processing module, in which the network device is configured to perform optional implementations of the second aspect.

In a sixth aspect, embodiments of the disclosure provide a terminal. The terminal includes: one or more processors, in which the terminal is configured to perform optional implementations of the first aspect.

In a seventh aspect, embodiments of the disclosure provide a network device. The network device includes: one or more processors, in which the network device is configured to perform optional implementations of the second aspect.

In an eighth aspect, embodiments of the disclosure provide a communication system. The communication system includes: a terminal, configured to perform the method described in optional implementations of the first aspect, and a network device, configured to perform the method described in optional implementations of the second aspect.

In a ninth aspect, embodiments of the disclosure provide a storage medium. The storage medium stores instructions which, when executed on a communication device, cause the communication device to perform the method described in optional implementations of the first aspect or the method described in optional implementations of the second aspect.

In a tenth aspect, embodiments of the disclosure provide a program product. The program product, when executed by a communication device, causes the communication device to perform the method described in optional implementations of the first aspect or the method described in optional implementations of the second aspect.

In an eleventh aspect, embodiments of the disclosure provide a computer program. When the computer program is running on a computer, the computer is caused to perform the method described in optional implementations of the first aspect or the method described in optional implementations of the second aspect.

In a twelfth aspect, embodiments of the disclosure provide a chip or a chip system. The chip or chip system includes a processing circuit, configured to perform the method described in optional implementations of the first aspect or the method described in optional implementations of the second aspect.

It may be understood that terminal, the network device, the communication system, the storage medium, the program product, the computer program and the chip or the chip system are all used to implement the method in the embodiments of the disclosure. Thus, regarding beneficial effects they may achieve, reference may made be to the beneficial effects in the corresponding methods, which is not repeated herein.

Embodiments of the disclosure provide a method for indicating a codebook, a terminal, and a network device. In some embodiments, terms such as "method for indicating a codebook", "method for information processing", and "communication method" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" or the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" or the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel, and the uplink, the downlink, etc. may be replaced with sidelink.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

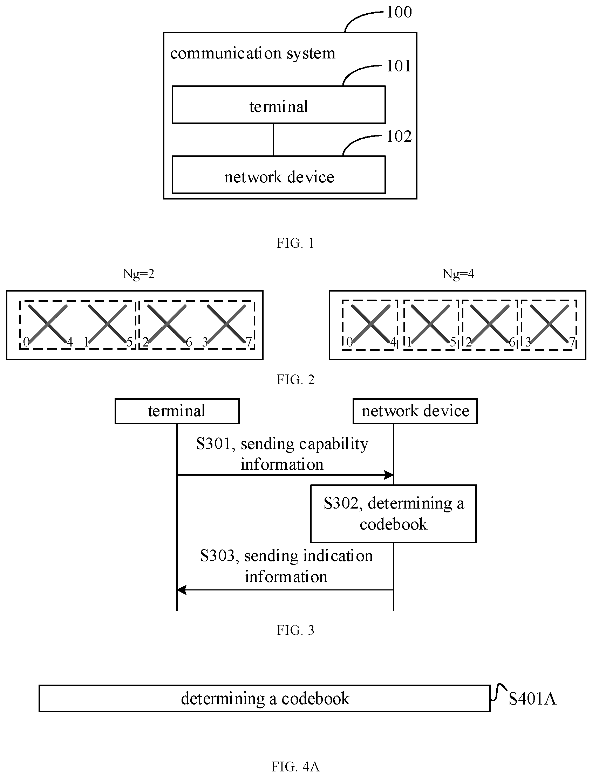

FIG. 1 is a schematic diagram illustrating an architecture of a communication system according to an embodiment of the disclosure.

As shown in FIG. 1, the communication system 100 includes a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the core network device may be a device including a first network function, a second network function, etc., or may be a plurality of devices or device groups, each including all or part of the first network function, the second network function, etc. The network element may be virtual or physical. The core network may include, for example, at least one of an evolved packet core (EPC), a 5G core network (5GCN), or a next generation core (NGC).

In some embodiments, the first network function may be, for example, an access and mobility management function (AMF).

In some embodiments, the first network function is configured for access control and mobility management of a terminal accessing an operator network. For example, the access control and mobility management includes functions such as mobility state management, allocation of a temporary user identity, and user authentication and authorization, and the name is not limited herein.

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

For uplink 8-port transmission enhancement, designs are provided for a fully coherent codebook, a partially coherent codebook, a non-coherent codebook, a TPMI, and a full-power transmission.

A number of antenna port groups of the terminal is Ng, antennas within each antenna port group perform fully coherent transmission, and antennas between different antenna port groups perform non-coherent transmission.

When the terminal is a fully coherent terminal, Ng=1. When the terminal is a partially coherent terminal, Ng=2 or 4. When the terminal is a non-coherent terminal, Ng=8. For an 8-port fully coherent codebook, a Release 15 (R15) downlink type I codebook with 8 ports is adopted, and an oversampling factor is set to 1. For a partial coherent codebook with Ng=2, the design is based on an R15 uplink 4-port codebook. For a partial coherent codebook with Ng=4, the design is based on an R15 uplink 2-port codebook. For a non-coherent codebook with Ng=8, all antenna selection vectors or antenna selection matrices are adopted.

It may be understood that, for some 8-port codewords, full-power transmission cannot be achieved due to limitations of physical uplink shared channel (PUSCH) power control rules.

In the PUSCH power control rules, a transmission power needs to be multiplied by a power scaling factor. The power scaling factor is defined as a number of non-zero antenna ports for PUSCH transmission divided by the total number of configured antenna ports. For example, when the 4-port codeword is $\begin{bmatrix} 1 \\ 0 \\ 1 \\ 0 \end{bmatrix}$, the parameter is 2/4=1/2, i.e., full-power transmission cannot be achieved; when the 4-port codeword is $\begin{bmatrix} 1 & 0 \\ 0 & 1 \\ 1 & 0 \\ 0 & -j \end{bmatrix}$, the parameter is 4/4=1, i.e., full-power transmission may be achieved.

Thus, when the number of uplink transmission ports is 8, the full-power transmission may be achieved in the 8-port fully coherent codebook. The full-power transmission cannot be achieved in the 8-port partially coherent codebook with Ng=2 and 1 transmission layer. The full-power transmission cannot be achieved in the 8-port partially coherent codebook with Ng=4 and any one of 1 to 3 transmission layers. The full-power transmission cannot be achieved in the 8-port non-coherent codebook with Ng=8 and any one of 1 to 7 transmission layers.

In the discussions of the full-power transmission for uplink 2 ports and uplink 4 ports, to achieve the full-power transmission, a plurality of full-power transmission modes are defined. Based on different power amplifier (PA) architectures of the terminal, three different capabilities 1-3 are defined for the terminal for the power class 3.

In the capability 1, each radio frequency (RF) chain is configured with a PA capable of full power, for example, [23 23] dBm. In the capability 2, no RF chain is configured with a PA capable of full power, for example, [20 20] dBm. In the capability 3, some RF chains are configured with PAs capable of full power, for example, [23 20] dBm.

For the three different capabilities of the terminal, three full-power transmission modes 0-2 are provided. In the mode 0, the PUSCH power scaling factor is fixedly set to 1, corresponding to the capability 1 of the terminal. Since each PA is capable of transmitting at full power, non-coherent codewords can achieve full-power transmission. For example, for the codeword $\frac{1}{\sqrt{2}}\begin{bmatrix} 1 \\ 0 \end{bmatrix}$, the full-power transmission is achieved using the first PA. In the mode 1 corresponding to the capability 2 and the capability 3 of the terminal, the full-power transmission is achieved by introducing codewords that support the full-power transmission based on an original codebook subset restriction. For example, for a non-coherent codebook with 4 ports and 2 layers, a partially coherent codeword $\frac{1}{2}\begin{bmatrix} 1 & 0 \\ 0 & 1 \\ 1 & 0 \\ 0 & -j \end{bmatrix}$ with 4 ports and 2 layers is introduced. In the mode 2 corresponding to the capability 2 and the capability 3 of the terminal, the full-power transmission is achieved in two methods. In the method 1, the terminal achieves the full-power transmission via virtualization of a sounding reference signal (SRS) port. For example, for [20 20 17 17] dBm, a base station configures a 2-port SRS, and a UE may obtain [23 20] dBm via virtualization of the SRS port, that is, using the codeword $\frac{1}{\sqrt{2}}\begin{bmatrix}1\\0\end{bmatrix}$ to achieve the full-power transmission. In the method 2, the terminal reports a TPMI group that supports the full-power transmission based on the PA architecture. For example, for [20 20 20 17] dBm, a TPMI group G3 may be reported.

For example, as shown in Table 1, codewords included in the TPMI group G3 are illustrated.

Table 1

| G3 | $\{\frac{1}{2}\begin{bmatrix}1 & 0\\0 & 0\\0 & 1\\0 & 0\end{bmatrix},\frac{1}{2}\begin{bmatrix}1 & 0\\0 & 1\\0 & 0\\0 & 0\end{bmatrix},\frac{1}{2}\begin{bmatrix}0 & 0\\1 & 0\\0 & 1\\0 & 0\end{bmatrix}\},\frac{1}{2}\begin{bmatrix}1 & 0 & 0\\0 & 1 & 0\\0 & 0 & 1\\0 & 0 & 0\end{bmatrix}$ |
|---|---|

In some embodiments, for a non-coherent codebook with 2 antenna ports, to achieve the uplink full-power transmission:

in a case of 1 transmission layer, a codeword corresponding to TPMI=2 is added.

In some embodiments, for a non-coherent codebook with 4 antenna ports, to achieve the uplink full-power transmission:

in a case of 1 transmission layer, for both cyclic prefix orthogonal frequency division multiplexing (CP-OFDM) and discrete Fourier transform spread orthogonal frequency division multiplexing (DFT-s-OFDM) waveforms, a codeword corresponding to TPMI=13 is added;

in a case of 2 transmission layers, a codeword corresponding to TPMI=6 is added; and

in a case of 3 transmission layers, a codeword corresponding to TPMI=1 is added.

In some embodiments, for a partially coherent codebook with 4 antenna ports, to achieve the uplink full-power transmission:

in a case of 1 transmission layer, for both CP-OFDM and DFT-s-OFDM waveforms, a codeword corresponding to TPMI=12-15 is added.

In some embodiments, as shown in FIG. 2, a schematic diagram of antenna port group division for an 8-port terminal with Ng=2 and an 8-port terminal with Ng=4 is illustrated.

In a case that a number of port groups Ng is equal to 2, the two coherently transmitted antenna port groups are {0, 1, 4, 5} and {2, 3, 6, 7} respectively. In a case that a number of port groups Ng is equal to 4, the four coherently transmitted antenna port groups are {0, 4}, {1, 5}, {2, 6}, and {3, 7} respectively.

In the related art, a terminal supporting 8-port partial coherent transmission with 2 antenna port groups and 1 transmission layer does not support the full-power transmission when an 8-port partial coherent codebook with 2 antenna port groups and 1 transmission layer is used for transmission of the uplink signal or the uplink channel; and/or a terminal supporting 8-port partial coherent transmission with 4 antenna port groups and any one of 1 to 3 transmission layers does not support the full-power transmission when an 8-port partial coherent codebook with 4 antenna port groups and any one of 1 to 3 transmission layers is used for transmission of the uplink signal or the uplink channel. This is an urgent problem to be solved.

Based on the above problem, embodiments of the disclosure provide a method for indicating a codebook, a terminal, and a network device. The method performed by the terminal includes: receiving indication information sent from the network device, in which the indication information indicates a codebook configured by the network device for the terminal; the terminal supports 8-port partial coherent transmission with 2 antenna port groups and 1 transmission layer, and/or 8-port partial coherent transmission with 4 antenna port groups and any one of 1 to 3 transmission layers; and at least one codeword in the codebook supports full-power uplink transmission by the terminal. Thus, the terminal may achieve the full-power uplink transmission, which may increase the transmission power of the terminal and improve the uplink transmission performance.

FIG. 3 is an interaction diagram illustrating a method for indicating a codebook according to an embodiment of the disclosure. As shown in FIG. 3, embodiments of the disclosure relate to a method for indicating a codebook. The method includes the following steps S301 to S303.

At S301, a terminal sends capability information to a network device.

In this embodiment of the disclosure, the terminal may send the capability information to the network device. The capability information may indicate an uplink transmission capability of the terminal.

For example, the capability information may indicate that the terminal supports 8-port uplink transmission.

For example, the capability information may indicate that the terminal supports 8-port partial coherent uplink transmission.

It may be understood that the terminal supporting the 8-port partial coherent uplink transmission may mean that the terminal supports using an 8-port partial coherent codebook for uplink transmission.

For example, for the 8-port partial coherent codebook, an 8-port partial coherent codebook with 2 antenna port groups is designed based on the R15 uplink 4-port codebook, and an 8-port partial coherent codebook with 4 antenna port groups is designed based on the R15 uplink 2-port codebook.

In some embodiments, the capability information indicates that the terminal supports 8-port partial coherent transmission with 2 antenna port groups and 1 transmission layer, and/or 8-port partial coherent transmission with 4 antenna port groups and any one of 1 to 3 transmission layers.

In some embodiments, the capability information may indicate that the terminal supports the 8-port partial coherent transmission with 2 antenna port groups and 1 transmission layer.

In some embodiments, the capability information may indicate that the terminal supports the 8-port partial coherent transmission with 4 antenna port groups and 1 transmission layer.

In some embodiments, the capability information may indicate that the terminal supports the 8-port partial coherent transmission with 4 antenna port groups and 2 transmission layers.

In some embodiments, the capability information may indicate that the terminal supports the 8-port partial coherent transmission with 4 antenna port groups and 3 transmission layers.

It should be noted that, in the embodiments of the disclosure, a number of transmission layers is equal to a rank value. The number of transmission layers may also be replaced with the rank value, which is not specifically limited in embodiments of the disclosure.

In some embodiments, the terminal may independently send the capability information to the network device, or may also send the capability information to the network device based on an indication from the network device.

For example, the network device may send a capability request message to the terminal, requesting the terminal to report the capability information. In case of receiving the capability request message sent from the network device, the terminal may send the capability information to the network device.

In some embodiments, the name of the capability information is not limited, and the name of the capability information may be, for example, "function information", "first information", or the like.

It may be understood that when the terminal sends the capability information to the network device, an existing signaling or message may be reused, or a new signaling or message may also be used.

For example, the terminal sends a radio resource control (RRC) signaling to the network device, and the RRC signaling may include the capability information.

For example, the network device receives the RRC signaling sent from the terminal, and the RRC signaling may include the capability information.

At S302, the network device determines a codebook for the terminal.

In the embodiments of the disclosure, the network device may determine a codebook for the terminal and configure the determined codebook for the terminal.

In some embodiments, the network device may determine the capability information of the terminal and determine the codebook for the terminal based on the capability information of the terminal.

In some embodiments, in a case that the network device receives the capability information sent from the terminal, and the capability information indicates that the terminal supports 8-port partial coherent transmission with 2 antenna port groups and 1 transmission layer, and/or 8-port partial coherent transmission with 4 antenna port groups and any one of 1 to 3 transmission layers, the network device may determine that the terminal supports the 8-port partial coherent transmission with 2 antenna port groups and 1 transmission layer, and/or the 8-port partial coherent transmission with 4 antenna port groups and any one of 1 to 3 transmission layers.

In some embodiments, at least one codeword in the codebook supports full-power uplink transmission by the terminal.

In some embodiments, the at least one codeword in the codebook supports full-power transmission of an uplink signal by the terminal.

In some embodiments, the at least one codeword in the codebook supports full-power transmission of an uplink channel by the terminal.

In this embodiment of the disclosure, in a case that the network device determines that the terminal supports the 8-port partial coherent transmission with 2 antenna port groups and 1 transmission layer, and/or the 8-port partial coherent transmission with 4 antenna port groups and any one of 1 to 3 transmission layers, the network device may determine the codebook for the terminal, in which the at least one codeword in the determined codebook supports the full-power uplink transmission by the terminal.

It may be understood that, if the at least one codeword in the codebook determined by the network device supports the full-power uplink transmission by the terminal, and if the network device configures the determined codebook for the terminal, the terminal may use the codebook configured by the network device for the full-power uplink transmission.

In some embodiments, in a case that the network device determines that the terminal supports the 8-port partial coherent transmission with 2 antenna port groups and 1 transmission layer, the network device determines the codebook for the terminal. The codebook may be an 8-port partial coherent codebook with 2 antenna port groups and 1 transmission layer to which some specific codewords are added, or the codebook may also be an 8-port partial coherent codebook with 2 antenna port groups and 1 transmission layer in which some specific codewords are replaced with some other codewords.

In some embodiments, in a case that the network device determines that the terminal supports the 8-port partial coherent transmission with 4 antenna port groups and any one of 1 to 3 transmission layers, the network device determines the codebook for the terminal. The codebook may be an 8-port partial coherent codebook with 4 antenna port groups and any one of 1 to 3 transmission layers to which some specific codewords are added, or the codebook may also be an 8-port partial coherent codebook with 4 antenna port groups and any one of 1 to 3 transmission layers in which some specific codewords are replaced with some other codewords.

The specific codeword may support the full-power uplink transmission by the terminal.

For example, the specific codeword may be one or more codewords from an 8-port fully coherent codebook, or may also be one or more codewords from a partial coherent codebook.

It may be understood that, for the 8-port fully coherent codebook, the R15 downlink type I codebook with 8 ports is adopted, and an oversampling factor is set to 1.

For example, the specific codeword may be a codeword from an 8-port partial coherent codebook with 2 antenna port groups and/or a codeword from an 8-port partial coherent codebook with 4 antenna port groups.

It may be understood that, the 8-port partial coherent codebook with 2 antenna port groups is designed based on the R15 uplink 4-port codebook, and the 8-port partial coherent codebook with 4 antenna port groups is designed based on the R15 uplink 2-port codebook.

It may be understood that the number of specific codewords may be one or more, which is not specifically limited in embodiments of the disclosure.

In some embodiments, determining the codebook for the terminal by the network deice includes at least one of:

determining that the codebook is an 8-port partial coherent codebook with 2 antenna port groups and 1 transmission layer to which all 8-port fully coherent codewords with 1 transmission layer are added, in which the terminal supports 8-port partial coherent transmission with 2 antenna port groups and 1 transmission layer;

determining that the codebook is an 8-port partial coherent codebook with 4 antenna port groups and 1 transmission layer to which all the 8-port fully coherent codewords with 1 transmission layer are added, in which the terminal supports 8-port partial coherent transmission with 4 antenna port groups and 1 transmission layer;

determining that the codebook is an 8-port partial coherent codebook with 4 antenna port groups and 2 transmission layers to which all 8-port fully coherent codewords with 2 transmission layers are added, in which the terminal supports 8-port partial coherent transmission with 4 antenna port groups and 2 transmission layers;

determining that the codebook is an 8-port partial coherent codebook with 4 antenna port groups and 3 transmission layers to which all 8-port fully coherent codewords with 3 transmission layers are added, in which the terminal supports 8-port partial coherent transmission with 4 antenna port groups and 3 transmission layers;

determining that the codebook is an 8-port partial coherent codebook with 2 antenna port groups and 1 transmission layer to which a first specific 8-port fully coherent codeword with 1 transmission layer is added, in which the terminal supports the 8-port partial coherent transmission with 2 antenna port groups and 1 transmission layer;

determining that the codebook is an 8-port partial coherent codebook with 4 antenna port groups and 1 transmission layer to which a second specific 8-port fully coherent codeword with 1 transmission layer is added, in which the terminal supports the 8-port partial coherent transmission with 4 antenna port groups and 1 transmission layer;

determining that the codebook is an 8-port partial coherent codebook with 4 antenna port groups and 2 transmission layers to which a second specific 8-port fully coherent codeword with 2 transmission layers is added, in which the terminal supports the 8-port partial coherent transmission with 4 antenna port groups and 2 transmission layers;

determining that the codebook is an 8-port partial coherent codebook with 4 antenna port groups and 3 transmission layers to which a second specific 8-port fully coherent codeword with 3 transmission layers is added, in which the terminal supports the 8-port partial coherent transmission with 4 antenna port groups and 3 transmission layers;

determining that the codebook is an 8-port partial coherent codebook with 4 antenna port groups and 2 transmission layers to which all 8-port partial coherent codewords with 2 transmission layers and 2 antenna port groups are added, in which the terminal supports the 8-port partial coherent transmission with 4 antenna port groups and 2 transmission layers;

determining that the codebook is an 8-port partial coherent codebook with 4 antenna port groups and 3 transmission layers to which all 8-port partial coherent codewords with 3 transmission layers and 2 antenna port groups are added, in which the terminal supports the 8-port partial coherent transmission with 4 antenna port groups and 3 transmission layers;

determining that the codebook is an 8-port partial coherent codebook with 4 antenna port groups and 2 transmission layers to which a specific 8-port partial coherent codeword with 2 transmission layers and 2 antenna port groups is added, in which the terminal supports the 8-port partial coherent transmission with 4 antenna port groups and 2 transmission layers; or

determining that the codebook is an 8-port partial coherent codebook with 4 antenna port groups and 3 transmission layers to which a specific 8-port partial coherent codeword with 3 transmission layers and 2 antenna port groups is added, in which the terminal supports the 8-port partial coherent transmission with 4 antenna port groups and 3 transmission layers.

It may be understood that the 8-port fully coherent codeword is a codeword in the 8-port fully coherent codebook.

For the 8-port fully coherent codebook, the R15 downlink type I codebook with 8 ports is adopted, and the oversampling factor is set to 1.

It may be understood that the partial coherent codeword is a codeword from the 8-port partial coherent codebook with 2 antenna port groups and/or a codeword from the 8-port partial coherent codebook with 4 antenna port groups.

The 8-port partial coherent codebook with 2 antenna port groups is designed based on the R15 uplink 4-port codebook, and the 8-port partial coherent codebook with 4 antenna port groups is designed based on the R15 uplink 2-port codebook.

In some embodiments, the codebook includes at least one of:

an 8-port partial coherent codebook with 1 transmission layer and 2 antenna port groups, and all 8-port fully coherent codewords with 1 transmission layer, in which the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, in which the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, in which the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, in which the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, in which the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, in which the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, in which the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, in which the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, in which the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, in which the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, in which the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, in which the terminal supports the 8-port partial coherent transmission with 3 transmission layers and 4 antenna port groups.

For example, as shown in Table 2, all 8-port fully coherent codewords with 1 transmission layer are illustrated.

Table 2

| index | precoding matrix |
|---|---|
| 1-8 | $\begin{bmatrix}1\\1\\1\\1\\1\\1\\1\\1\end{bmatrix}$ $\begin{bmatrix}1\\1\\1\\1\\j\\j\\j\\j\end{bmatrix}$ $\begin{bmatrix}1\\1\\1\\1\\-1\\-1\\-1\\-1\end{bmatrix}$ $\begin{bmatrix}1\\1\\1\\1\\-j\\-j\\-j\\-j\end{bmatrix}$ $\begin{bmatrix}1\\j\\-1\\-j\\1\\j\\-1\\-j\end{bmatrix}$ $\begin{bmatrix}1\\j\\-1\\-j\\j\\-1\\-j\\1\end{bmatrix}$ $\begin{bmatrix}1\\j\\-1\\-j\\-1\\-j\\1\\j\end{bmatrix}$ $\begin{bmatrix}1\\j\\-1\\-j\\-j\\1\\j\\-1\end{bmatrix}$ |
| 9-16 | $\begin{bmatrix}1\\-1\\1\\-1\\1\\-1\\1\\-1\end{bmatrix}$ $\begin{bmatrix}1\\-1\\1\\-1\\j\\-j\\j\\-j\end{bmatrix}$ $\begin{bmatrix}1\\-1\\1\\-1\\-1\\1\\-1\\1\end{bmatrix}$ $\begin{bmatrix}1\\-1\\1\\-1\\-j\\j\\-j\\j\end{bmatrix}$ $\begin{bmatrix}1\\-j\\-1\\j\\1\\-j\\-1\\j\end{bmatrix}$ $\begin{bmatrix}1\\-j\\-1\\j\\j\\1\\-j\\-1\end{bmatrix}$ $\begin{bmatrix}1\\-j\\-1\\j\\-1\\j\\1\\-j\end{bmatrix}$ $\begin{bmatrix}1\\-j\\-1\\j\\-j\\-1\\j\\1\end{bmatrix}$ |

For example, as shown in Table 3, all 8-port fully coherent codewords with 1 transmission layer and an antenna configuration being a first configuration are illustrated.

The first configuration is that, in one polarization direction, a number of antenna ports in a horizontal dimension is 4 and a number of antenna ports in a vertical dimension is 1. The antenna configuration is (N1, N2), and (N1, N2) = (4, 1).

Table 3

| index | precoding matrix |
|---|---|
| 1-8 | $\begin{bmatrix}1\\1\\1\\1\\1\\1\\1\\1\end{bmatrix}$ $\begin{bmatrix}1\\1\\1\\1\\j\\j\\j\\j\end{bmatrix}$ $\begin{bmatrix}1\\1\\1\\1\\-1\\-1\\-1\\-1\end{bmatrix}$ $\begin{bmatrix}1\\1\\1\\1\\-j\\-j\\-j\\-j\end{bmatrix}$ $\begin{bmatrix}1\\j\\-1\\-j\\1\\j\\-1\\-j\end{bmatrix}$ $\begin{bmatrix}1\\j\\-1\\-j\\j\\-1\\-j\\1\end{bmatrix}$ $\begin{bmatrix}1\\j\\-1\\-j\\-1\\-j\\1\\j\end{bmatrix}$ $\begin{bmatrix}1\\j\\-1\\-j\\-j\\1\\j\\-1\end{bmatrix}$ |

(continued)

| index | precoding matrix |
|---|---|
| 9-16 | $\begin{bmatrix}1\\-1\\1\\-1\\1\\-1\\1\\-1\end{bmatrix}\begin{bmatrix}1\\-1\\1\\-1\\j\\-j\\j\\-j\end{bmatrix}\begin{bmatrix}1\\-1\\1\\-1\\1\\1\\-1\\1\end{bmatrix}\begin{bmatrix}1\\-1\\1\\-1\\-j\\j\\-j\\j\end{bmatrix}\begin{bmatrix}1\\-j\\-1\\j\\1\\-j\\-1\\j\end{bmatrix}\begin{bmatrix}1\\-j\\-1\\j\\j\\1\\-j\\-1\end{bmatrix}\begin{bmatrix}1\\-j\\-1\\j\\-1\\j\\1\\-j\end{bmatrix}\begin{bmatrix}1\\-j\\-1\\j\\-j\\-1\\j\\1\end{bmatrix}$ |

For example, as shown in Table 4, all 8-port fully coherent codewords with 1 transmission layer and an antenna configuration of the terminal being a second configuration are illustrated.

The second configuration is that, in one polarization direction, a number of antenna ports in a horizontal dimension is 2 and a number of antenna ports in a vertical dimension is 2. The antenna configuration is (N1, N2), and (N1, N2) = (2, 2).

Table 4

| index | precoding matrix |
|---|---|
| 1-8 | $\begin{bmatrix}1\\1\\1\\1\\1\\1\\1\\1\end{bmatrix}\begin{bmatrix}1\\1\\1\\1\\j\\j\\j\\j\end{bmatrix}\begin{bmatrix}1\\1\\1\\1\\-1\\-1\\-1\\-1\end{bmatrix}\begin{bmatrix}1\\1\\1\\1\\-j\\-j\\-j\\-j\end{bmatrix}\begin{bmatrix}1\\-1\\1\\-1\\1\\-1\\1\\-1\end{bmatrix}\begin{bmatrix}1\\-1\\1\\-1\\j\\-j\\j\\-j\end{bmatrix}\begin{bmatrix}1\\-1\\1\\-1\\-1\\1\\-1\\1\end{bmatrix}\begin{bmatrix}1\\-1\\1\\-1\\-j\\j\\-j\\j\end{bmatrix}$ |
| 9-16 | $\begin{bmatrix}1\\1\\-1\\-1\\1\\1\\-1\\-1\end{bmatrix}\begin{bmatrix}1\\1\\-1\\-1\\j\\j\\-j\\-j\end{bmatrix}\begin{bmatrix}1\\1\\-1\\-1\\-1\\-1\\1\\1\end{bmatrix}\begin{bmatrix}1\\1\\-1\\-1\\-j\\-j\\j\\j\end{bmatrix}\begin{bmatrix}1\\-1\\-1\\1\\1\\-1\\-1\\1\end{bmatrix}\begin{bmatrix}1\\-1\\-1\\1\\j\\-j\\-j\\j\end{bmatrix}\begin{bmatrix}1\\-1\\-1\\1\\-1\\1\\1\\-1\end{bmatrix}\begin{bmatrix}1\\-1\\-1\\1\\-j\\j\\j\\-j\end{bmatrix}$ |

For example, as shown in Table 5, partial 8-port fully coherent codewords with 3 transmission layers and an antenna configuration of the terminal being a first configuration are illustrated.

The first configuration is that, in one polarization direction, a number of antenna ports in a horizontal dimension is 4 and a number of antenna ports in a vertical dimension is 1. The antenna configuration is (N1, N2), and (N1, N2) = (4, 1).

Table 5

$$\begin{bmatrix} 1 & 1 & 1 \\ 1 & j & 1 \\ 1 & -1 & 1 \\ 1 & -j & 1 \\ 1 & 1 & -1 \\ 1 & j & -1 \\ 1 & -1 & -1 \\ 1 & -j & -1 \end{bmatrix} \begin{bmatrix} 1 & 1 & 1 \\ 1 & j & 1 \\ 1 & -1 & 1 \\ 1 & -j & 1 \\ j & j & -j \\ j & -1 & -j \\ j & -j & -j \\ j & 1 & -j \end{bmatrix} \begin{bmatrix} 1 & 1 & 1 \\ 1 & -1 & 1 \\ 1 & 1 & 1 \\ 1 & -1 & 1 \\ 1 & 1 & -1 \\ 1 & -1 & -1 \\ 1 & 1 & -1 \\ 1 & -1 & -1 \end{bmatrix} \begin{bmatrix} 1 & 1 & 1 \\ 1 & -1 & 1 \\ 1 & 1 & 1 \\ 1 & -1 & 1 \\ j & j & -j \\ j & -j & -j \\ j & j & -j \\ j & -j & -j \end{bmatrix}$$

For example, as shown in Table 6, partial 8-port fully coherent codewords with 3 transmission layers and an antenna configuration of the terminal being a second configuration are illustrated.

The second configuration is that, in one polarization direction, a number of antenna ports in a horizontal dimension is 2 and a number of antenna ports in a vertical dimension is 2. The antenna configuration is (N1, N2), and (N1, N2) = (2, 2).

Table 6

$$\begin{bmatrix} 1 & 1 & 1 \\ 1 & 1 & 1 \\ 1 & -1 & 1 \\ 1 & -1 & 1 \\ 1 & 1 & -1 \\ 1 & 1 & -1 \\ 1 & -1 & -1 \\ 1 & -1 & -1 \end{bmatrix} \begin{bmatrix} 1 & 1 & 1 \\ 1 & 1 & 1 \\ 1 & -1 & 1 \\ 1 & -1 & 1 \\ j & j & -j \\ j & j & -j \\ j & -j & -j \\ j & -j & -j \end{bmatrix} \begin{bmatrix} 1 & 1 & 1 \\ 1 & -1 & 1 \\ 1 & 1 & 1 \\ 1 & -1 & 1 \\ 1 & 1 & -1 \\ 1 & -1 & -1 \\ 1 & 1 & -1 \\ 1 & -1 & -1 \end{bmatrix} \begin{bmatrix} 1 & 1 & 1 \\ 1 & -1 & 1 \\ 1 & 1 & 1 \\ 1 & -1 & 1 \\ j & j & -j \\ j & -j & -j \\ j & j & -j \\ j & -j & -j \end{bmatrix}$$

In some embodiments, for 1 transmission layer and an antenna configuration of the terminal being a first configuration, the first specific 8-port fully coherent codeword includes at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
in which the first configuration is that, in one polarization direction, a number of antenna ports in a horizontal dimension is 4 and a number of antenna ports in a vertical dimension is 1; and the first parameter indicates a beam index selected in the horizontal dimension, the second parameter indicates a beam index selected in the vertical dimension, and the third parameter indicates a co-phasing coefficient between two polarization directions.

For example, the first configuration is that, in one polarization direction, a number of antenna ports in a horizontal dimension is 4 and a number of antenna ports in a vertical dimension is 1. The antenna configuration is (N1, N2), and (N1, N2) = (4, 1).

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'.

In an embodiment of the disclosure, for 1 transmission layer and the antenna configuration of the terminal being the first configuration, the first specific 8-port fully coherent codeword includes: a codeword determined when the first parameter, the second parameter, and the third parameter are all 0.

For example, for 1 transmission layer and the antenna configuration of the terminal being the first configuration, the first specific 8-port fully coherent codeword may be a codeword $\begin{bmatrix} 1 \\ 1 \\ 1 \\ 1 \\ 1 \\ 1 \\ 1 \\ 1 \end{bmatrix}$ determined when the first parameter, the second parameter, and the third parameter are all 0.

In an embodiment of the disclosure, for 1 transmission layer and the antenna configuration of the terminal being the first configuration, the first specific 8-port fully coherent codeword includes: a codeword determined when the first parameter is 1, and the second parameter and the third parameter are all 0.

For example, for 1 transmission layer and the antenna configuration of the terminal being the first configuration, the first specific 8-port fully coherent codeword may be a codeword $\begin{bmatrix} 1 \\ j \\ -1 \\ -j \\ 1 \\ j \\ -1 \\ -j \end{bmatrix}$ determined when the first parameter is 1, and the second parameter and the third parameter are all 0.

In an embodiment of the disclosure, for 1 transmission layer and the antenna configuration of the terminal being the first configuration, the first specific 8-port fully coherent codeword includes: a codeword determined when the first parameter and the second parameter are all 0, and the third parameter is 1.

For example, for 1 transmission layer and the antenna configuration of the terminal being the first configuration, the first specific 8-port fully coherent codeword may be a codeword $\begin{bmatrix} 1 \\ 1 \\ 1 \\ 1 \\ j \\ j \\ j \\ j \end{bmatrix}$ determined when the first parameter and the second parameter are all 0, and the third parameter is 1.

In an embodiment of the disclosure, for 1 transmission layer and the antenna configuration of the terminal being the first configuration, the first specific 8-port fully coherent codeword includes: a codeword determined when the first parameter and the second parameter are all 0, and the third parameter is 2.

For example, for 1 transmission layer and the antenna configuration of the terminal being the first configuration, the first specific 8-port fully coherent codeword may be a codeword $\begin{bmatrix} 1 \\ 1 \\ 1 \\ 1 \\ -1 \\ -1 \\ -1 \\ -1 \end{bmatrix}$ determined when the first parameter and the second parameter are all 0, and the third parameter is 2.

In an embodiment of the disclosure, for 1 transmission layer and the antenna configuration of the terminal being the first configuration, the first specific 8-port fully coherent codeword includes: a codeword determined when the first parameter and the second parameter are all 0, and the third parameter is 3.

For example, for 1 transmission layer and the antenna configuration of the terminal being the first configuration, the first specific 8-port fully coherent codeword may be a codeword $\begin{bmatrix} 1 \\ 1 \\ 1 \\ 1 \\ -j \\ -j \\ -j \\ -j \end{bmatrix}$ determined when the first parameter and the second parameter are all 0, and the third parameter is 3.

In an embodiment of the disclosure, for 1 transmission layer and the antenna configuration of the terminal being the first configuration, the first specific 8-port fully coherent codeword includes: a codeword determined when the first parameter is 1, the second parameter is 0, and the third parameter is 1.

For example, for 1 transmission layer and the antenna configuration of the terminal being the first configuration, the first specific 8-port fully coherent codeword may be a codeword $\begin{bmatrix} 1 \\ j \\ -1 \\ -j \\ j \\ -1 \\ -j \\ 1 \end{bmatrix}$ determined when the first parameter is 1, the second parameter is 0, and the third parameter is 1.

In an embodiment of the disclosure, for 1 transmission layer and the antenna configuration of the terminal being the first configuration, the first specific 8-port fully coherent codeword includes: a codeword determined when the first parameter is 1, the second parameter is 0, and the third parameter is 2.

For example, for 1 transmission layer and the antenna configuration of the terminal being the first configuration, the first specific 8-port fully coherent codeword may be a codeword $\begin{bmatrix} 1 \\ j \\ -1 \\ -j \\ -1 \\ -j \\ 1 \\ j \end{bmatrix}$ determined when the first parameter is 1, the second parameter is 0, and the third parameter is 2.

In an embodiment of the disclosure, for 1 transmission layer and the antenna configuration of the terminal being the first configuration, the first specific 8-port fully coherent codeword includes: a codeword determined when the first parameter is 1, the second parameter is 0, and the third parameter is 3.

For example, for 1 transmission layer and the antenna configuration of the terminal being the first configuration, the first specific 8-port fully coherent codeword may be a codeword $\begin{bmatrix} 1 \\ j \\ -1 \\ -j \\ -j \\ 1 \\ j \\ -1 \end{bmatrix}$ determined when the first parameter is 1, the second parameter is 0, and the third parameter is 3.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 1 transmission layer and the antenna configuration of the terminal being the first configuration, the first specific 8-port fully coherent codeword may include one or more of the above embodiments, which is not specifically limited in embodiments of the disclosure.

In some embodiments, for 1 transmission layer and an antenna configuration of the terminal being a second configuration, the first specific 8-port fully coherent codeword includes at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
in which the second configuration is that, in one polarization direction, a number of antenna ports in a horizontal dimension is 2 and a number of antenna ports in a vertical dimension is 2; and the first parameter indicates a beam index selected in the horizontal dimension, the second parameter indicates a beam index selected in the vertical dimension, and the third parameter indicates a co-phasing coefficient between two polarization directions.

For example, the second configuration is that, in one polarization direction, a number of antenna ports in a horizontal dimension is 2 and a number of antenna ports in a vertical dimension is 2. The antenna configuration of the terminal is (N1, N2), and (N1, N2) = (2, 2).

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'.

In an embodiment of the disclosure, for 1 transmission layer and the antenna configuration of the terminal being the second configuration, the first specific 8-port fully coherent codeword includes: a codeword determined when the first parameter, the second parameter, and the third parameter are all 0.

For example, for 1 transmission layer and the antenna configuration of the terminal being the second configuration, the first specific 8-port fully coherent codeword may be a codeword $\begin{bmatrix} 1 \\ 1 \\ 1 \\ 1 \\ 1 \\ 1 \\ 1 \\ 1 \end{bmatrix}$ determined when the first parameter, the second parameter, and the third parameter are all 0.

In an embodiment of the disclosure, for 1 transmission layer and the antenna configuration of the terminal being the second configuration, the first specific 8-port fully coherent codeword includes: a codeword determined when the first parameter is 1, and the second parameter and the third parameter are all 0.

For example, for 1 transmission layer and the antenna configuration of the terminal being the second configuration, the first specific 8-port fully coherent codeword may be a codeword $\begin{bmatrix} 1 \\ -1 \\ 1 \\ -1 \\ 1 \\ -1 \\ 1 \\ -1 \end{bmatrix}$ determined when the first parameter is 1, and the second parameter and the third parameter are all 0.

In an embodiment of the disclosure, for 1 transmission layer and the antenna configuration of the terminal being the second configuration, the first specific 8-port fully coherent codeword includes: a codeword determined when the first parameter and the second parameter are all 0, and the third parameter is 1.

For example, for 1 transmission layer and the antenna configuration of the terminal being the second configuration, the first specific 8-port fully coherent codeword may be a codeword $\begin{bmatrix} 1 \\ 1 \\ 1 \\ 1 \\ j \\ j \\ j \\ j \end{bmatrix}$ determined when the first parameter and the second parameter are all 0, and the third parameter is 1.

In an embodiment of the disclosure, for 1 transmission layer and the antenna configuration of the terminal being the second configuration, the first specific 8-port fully coherent codeword includes: a codeword determined when the first parameter and the second parameter are all 0, and the third parameter is 2.

For example, for 1 transmission layer and the antenna configuration of the terminal being the second configuration, the first specific 8-port fully coherent codeword may be a codeword $\begin{bmatrix} 1 \\ 1 \\ 1 \\ 1 \\ -1 \\ -1 \\ -1 \\ -1 \end{bmatrix}$ determined when the first parameter and the second parameter are all 0, and the third parameter is 2.

In an embodiment of the disclosure, for 1 transmission layer and the antenna configuration of the terminal being the second configuration, the first specific 8-port fully coherent codeword includes: a codeword determined when the first parameter and the second parameter are all 0, and the third parameter is 3.

For example, for 1 transmission layer and the antenna configuration of the terminal being the second configuration, the first specific 8-port fully coherent codeword may be a codeword $\begin{bmatrix} 1 \\ 1 \\ 1 \\ 1 \\ -j \\ -j \\ -j \\ -j \end{bmatrix}$ determined when the first parameter and the second parameter are all 0, and the third parameter is 3.

In an embodiment of the disclosure, for 1 transmission layer and the antenna configuration of the terminal being the second configuration, the first specific 8-port fully coherent codeword includes: a codeword determined when the first parameter is 1, the second parameter is 0, and the third parameter is 1.

For example, for 1 transmission layer and the antenna configuration of the terminal being the second configuration, the first specific 8-port fully coherent codeword may be a codeword $\begin{bmatrix} 1 \\ -1 \\ 1 \\ -1 \\ j \\ -j \\ j \\ -j \end{bmatrix}$ determined when the first parameter is 1, the second parameter is 0, and the third parameter is 1.

In an embodiment of the disclosure, for 1 transmission layer and the antenna configuration of the terminal being the second configuration, the first specific 8-port fully coherent codeword includes: a codeword determined when the first parameter is 1, the second parameter is 0, and the third parameter is 2.

For example, for 1 transmission layer and the antenna configuration of the terminal being the second configuration, the first specific 8-port fully coherent codeword may be a codeword $\begin{bmatrix} 1 \\ -1 \\ 1 \\ -1 \\ -1 \\ 1 \\ -1 \\ 1 \end{bmatrix}$ determined when the first parameter is 1, the second parameter is 0, and the third parameter is 2.

In an embodiment of the disclosure, for 1 transmission layer and the antenna configuration of the terminal being the second configuration, the first specific 8-port fully coherent codeword includes: a codeword determined when the first parameter is 1, the second parameter is 0, and the third parameter is 3.

For example, for 1 transmission layer and the antenna configuration of the terminal being the second configuration, the first specific 8-port fully coherent codeword may be a codeword $\begin{bmatrix} 1 \\ -1 \\ 1 \\ -1 \\ -j \\ j \\ -j \\ j \end{bmatrix}$ determined when the first parameter is 1, the second parameter is 0, and the third parameter is 3.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 1 transmission layer and the antenna configuration of the terminal being the second configuration, the first specific 8-port fully coherent codeword may include one or more of the above embodiments, which is not specifically limited in embodiments of the disclosure.

In some embodiments, for 1 transmission layer and an antenna configuration of the terminal being a first configuration, the second specific 8-port fully coherent codeword includes at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3, in which the first configuration is that, in one polarization direction, a number of antenna ports in a horizontal dimension is 4 and a number of antenna ports in a vertical dimension is 1; and the first parameter indicates a beam index selected in the horizontal dimension, the second parameter indicates a beam index selected in the vertical dimension, and the third parameter indicates a co-phasing coefficient between two polarization directions.

For example, the first configuration is that, in one polarization direction, a number of antenna ports in a horizontal dimension is 4 and a number of antenna ports in a vertical dimension is 1. The antenna configuration is (N1, N2), and (N1, N2) = (4, 1).

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'.

In an embodiment of the disclosure, for 1 transmission layer and the antenna configuration of the terminal being the first configuration, the second specific 8-port fully coherent codeword includes: a codeword determined when the first parameter, the second parameter, and the third parameter are all 0.

For example, for 1 transmission layer and the antenna configuration of the terminal being the first configuration, the second specific 8-port fully coherent codeword may be a codeword $\begin{bmatrix} 1 \\ 1 \\ 1 \\ 1 \\ 1 \\ 1 \\ 1 \\ 1 \end{bmatrix}$ determined when the first parameter, the second parameter, and the third parameter are all 0.

In an embodiment of the disclosure, for 1 transmission layer and the antenna configuration of the terminal being the first configuration, the second specific 8-port fully coherent codeword includes: a codeword determined when the first parameter and the second parameter are all 0, and the third parameter is 1.

For example, for 1 transmission layer and the antenna configuration of the terminal being the first configuration, the second specific 8-port fully coherent codeword may be a codeword $\begin{bmatrix} 1 \\ 1 \\ 1 \\ 1 \\ j \\ j \\ j \\ j \end{bmatrix}$ determined when the first parameter and the second parameter are all 0, and the third parameter is 1.

In an embodiment of the disclosure, for 1 transmission layer and the antenna configuration of the terminal being the first configuration, the second specific 8-port fully coherent codeword includes: a codeword determined when the first parameter and the second parameter are all 0, and the third parameter is 2.

For example, for 1 transmission layer and the antenna configuration of the terminal being the first configuration, the second specific 8-port fully coherent codeword may be a codeword $\begin{bmatrix} 1 \\ 1 \\ 1 \\ 1 \\ -1 \\ -1 \\ -1 \\ -1 \end{bmatrix}$ determined when the first parameter and the second parameter are all 0, and the third parameter is 2.

In an embodiment of the disclosure, for 1 transmission layer and the antenna configuration of the terminal being the first configuration, the second specific 8-port fully coherent codeword includes: a codeword determined when the first parameter and the second parameter are all 0, and the third parameter is 3.

For example, for 1 transmission layer and the antenna configuration of the terminal being the first configuration, the second specific 8-port fully coherent codeword may be a codeword $\begin{bmatrix} 1 \\ 1 \\ 1 \\ 1 \\ -j \\ -j \\ -j \\ -j \end{bmatrix}$ determined when the first parameter and the second parameter are all 0, and the third parameter is 3.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 1 transmission layer and the antenna configuration of the terminal being the first configuration, the second specific 8-port fully coherent codeword may include one or more of the above embodiments, which is not specifically limited in embodiments of the disclosure.

In some embodiments, for 1 transmission layer and an antenna configuration of the terminal being a second configuration, the second specific 8-port fully coherent codeword includes at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3, in which the second configuration is that, in one polarization direction, a number of antenna ports in a horizontal dimension is 2 and a number of antenna ports in a vertical dimension is 2; and
the first parameter indicates a beam index selected in the horizontal dimension, the second parameter indicates a beam index selected in the vertical dimension, and the third parameter indicates a co-phasing coefficient between two polarization directions.

For example, the second configuration is that, in one polarization direction, a number of antenna ports in a horizontal dimension is 2 and a number of antenna ports in a vertical dimension is 2. The antenna configuration of the terminal is (N1, N2), and (N1, N2) = (2, 2).

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'.

In an embodiment of the disclosure, for 1 transmission layer and the antenna configuration of the terminal being the second configuration, the second specific 8-port fully coherent codeword includes: a codeword determined when the first parameter, the second parameter, and the third parameter are all 0.

For example, for 1 transmission layer and the antenna configuration of the terminal being the second configuration, the second specific 8-port fully coherent codeword may be a codeword $\begin{bmatrix} 1 \\ 1 \\ 1 \\ 1 \\ 1 \\ 1 \\ 1 \\ 1 \end{bmatrix}$ determined when the first parameter, the second parameter, and the third parameter are all 0.

In an embodiment of the disclosure, for 1 transmission layer and the antenna configuration of the terminal being the second configuration, the second specific 8-port fully coherent codeword includes: a codeword determined when the first parameter and the second parameter are all 0, and the third parameter is 1.

For example, for 1 transmission layer and the antenna configuration of the terminal being the second configuration, the second specific 8-port fully coherent codeword may be a codeword $\begin{bmatrix} 1 \\ 1 \\ 1 \\ 1 \\ j \\ j \\ j \\ j \end{bmatrix}$ determined when the first parameter and the second parameter are all 0, and the third parameter is 1.

In an embodiment of the disclosure, for 1 transmission layer and the antenna configuration of the terminal being the second configuration, the second specific 8-port fully coherent codeword includes: a codeword determined when the first parameter and the second parameter are all 0, and the third parameter is 2.

For example, for 1 transmission layer and the antenna configuration of the terminal being the second configuration, the second specific 8-port fully coherent codeword may be a codeword $\begin{bmatrix} 1 \\ 1 \\ 1 \\ 1 \\ -1 \\ -1 \\ -1 \\ -1 \end{bmatrix}$ determined when the first parameter and the second parameter are all 0, and the third parameter is 2.

In an embodiment of the disclosure, for 1 transmission layer and the antenna configuration of the terminal being the second configuration, the second specific 8-port fully coherent codeword includes: a codeword determined when the first parameter and the second parameter are all 0, and the third parameter is 3.

For example, for 1 transmission layer and the antenna configuration of the terminal being the second configuration, the second specific 8-port fully coherent codeword may be a codeword $\begin{bmatrix} 1 \\ 1 \\ 1 \\ 1 \\ -j \\ -j \\ -j \\ -j \end{bmatrix}$ determined when the first parameter and the second parameter are all 0, and the third parameter is 3.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 1 transmission layer and the antenna configuration of the terminal being the second configuration, the second specific 8-port fully coherent codeword may include one or more of the above embodiments, which is not specifically limited in

**EP 4 757 195 A1**

embodiments of the disclosure.

In some embodiments, for 2 transmission layers, the second specific 8-port fully coherent codeword includes at least one of:

a codeword determined when a first parameter, a second parameter, a third parameter, and a fourth parameter are all 0; or

a codeword determined when the first parameter, the second parameter, and a fourth parameter are all 0, and the third parameter is 1,

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'. The fourth parameter indicates a rotation index, and the fourth parameter is 'i1, 3'.

In an embodiment of the disclosure, for 2 transmission layers, the second specific 8-port fully coherent codeword includes: a codeword determined when the first parameter, the second parameter, the third parameter, and the fourth parameter are all 0.

For example, for 2 transmission layers, the second specific 8-port fully coherent codeword may be a codeword

$$A = \begin{bmatrix} 1 & 1 \\ 1 & 1 \\ 1 & 1 \\ 1 & 1 \\ 1 & -1 \\ 1 & -1 \\ 1 & -1 \\ 1 & -1 \end{bmatrix}$$ determined when the first parameter, the second parameter, the third parameter, and the fourth parameter are all 0.

In an embodiment of the disclosure, for 2 transmission layers, the second specific 8-port fully coherent codeword includes: a codeword determined when the first parameter, the second parameter, and the fourth parameter are all 0, and the third parameter is 1.

For example, for 2 transmission layers, the second specific 8-port fully coherent codeword may be a codeword

$$B = \begin{bmatrix} 1 & 1 \\ 1 & 1 \\ 1 & 1 \\ 1 & 1 \\ j & -j \\ j & -j \\ j & -j \\ j & -j \end{bmatrix}$$ determined when the first parameter, the second parameter, and the fourth parameter are all 0, and the third parameter is 1.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 2 transmission layer, the second specific 8-port fully coherent codeword may include one or more of the above embodiments, which is not specifically limited in embodiments of the disclosure.

In some embodiments, for 3 transmission layers, the second specific 8-port fully coherent codeword includes at least one of:

a codeword determined when a first parameter, a second parameter, a third parameter, and a fourth parameter are all 0; or

a codeword determined when the first parameter, the second parameter, and the fourth parameter are all 0, and the third parameter is 1,

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'. The fourth parameter indicates a rotation index, and the fourth parameter is 'i1, 3'.

In an embodiment of the disclosure, for 3 transmission layers, the second specific 8-port fully coherent codeword includes: a codeword determined when the first parameter, the second parameter, the third parameter, and the fourth parameter are all 0.

For example, for 3 transmission layers, the second specific 8-port fully coherent codeword may be a codeword

$$\begin{bmatrix} 1 & 1 & 1 \\ 1 & j & 1 \\ 1 & -1 & 1 \\ 1 & -j & 1 \\ 1 & 1 & -1 \\ 1 & j & -1 \\ 1 & -1 & -1 \\ 1 & -j & -1 \end{bmatrix}$$ determined when the first parameter, the second parameter, the third parameter, and the fourth parameter are all 0.

In an embodiment of the disclosure, for 3 transmission layers, the second specific 8-port fully coherent codeword includes: a codeword determined when the first parameter, the second parameter, and the fourth parameter are all 0, and the third parameter is 1.

For example, for 3 transmission layers, the second specific 8-port fully coherent codeword may be a codeword

$$\begin{bmatrix} 1 & 1 & 1 \\ 1 & j & 1 \\ 1 & -1 & 1 \\ 1 & -j & 1 \\ j & j & -j \\ j & -1 & -j \\ j & -j & -j \\ j & 1 & -j \end{bmatrix}$$ determined when the first parameter, the second parameter, and a fourth parameter are all 0, and the third parameter is 1.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 3 transmission layer, the second specific 8-port fully coherent codeword may include one or more of the above embodiments, which is not specifically limited in embodiments of the disclosure.

In some embodiments, for 3 transmission layers, the second specific 8-port fully coherent codeword includes at least one of:

a codeword determined when a first parameter, a second parameter, and a third parameter are all 0, and a fourth parameter is 1; or

a codeword determined when the first parameter and the second parameter are all 0, and the third parameter and the fourth parameter are all 1,

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

For example, the first parameter indicates a beam index selected in the horizontal dimension, and the first parameter is 'i1, 1'. The second parameter indicates a beam index selected in the vertical dimension, and the second parameter is 'i1, 2'. The third parameter indicates a co-phasing coefficient between two polarization directions, and the third parameter is 'i2'. The fourth parameter indicates a rotation index, and the fourth parameter is 'i1, 3'.

In an embodiment of the disclosure, for 3 transmission layers, the second specific 8-port fully coherent codeword includes: a codeword determined when the first parameter, the second parameter, and the third parameter are all 0, and the fourth parameter is 1.

For example, for 3 transmission layers, the second specific 8-port fully coherent codeword may be a codeword

$$
\begin{bmatrix}
1 & 1 & 1 \\
1 & -1 & 1 \\
1 & 1 & 1 \\
1 & -1 & 1 \\
1 & 1 & -1 \\
1 & -1 & -1 \\
1 & 1 & -1 \\
1 & -1 & -1
\end{bmatrix}
$$ determined when the first parameter, the second parameter, and the third parameter are all 0, and the fourth parameter is 1.

In an embodiment of the disclosure, for 3 transmission layers, the second specific 8-port fully coherent codeword includes: a codeword determined when the first parameter and the second parameter are all 0, and the third parameter and the fourth parameter are all 1.

For example, for 3 transmission layers, the second specific 8-port fully coherent codeword may be a codeword

$$
\begin{bmatrix}
1 & 1 & 1 \\
1 & -1 & 1 \\
1 & 1 & 1 \\
1 & -1 & 1 \\
j & j & -j \\
j & -j & -j \\
j & j & -j \\
j & -j & -j
\end{bmatrix}
$$ determined when the first parameter and the second parameter are all 0, and the third parameter and the fourth parameter are all 1.

It should be noted that, in the above examples, at least one codeword in the above codewords may further include a coefficient. A value of the coefficient is not specifically limited in embodiments of the disclosure.

It should be noted that the above embodiments are merely partial examples and are not exhaustive. For 3 transmission layer, the second specific 8-port fully coherent codeword may include one or more of the above embodiments, which is not specifically limited in embodiments of the disclosure.

In some embodiments, for 2 transmission layers, the specific 8-port partial coherent codeword is related to a first codeword and a second codeword, a mapping relationship exists between values corresponding to ports in a first port group of a first layer of the specific 8-port partial coherent codeword and values corresponding to ports of the first codeword, and a mapping relationship exists between values corresponding to ports in a second port group of a second layer of the specific 8-port partial coherent codeword and values corresponding to ports of the second codeword;

in which the first codeword is a codeword with 4 antenna ports, 1 transmission layer, and a TPMI being a first specific value, the first specific value is at least one of 12 to 27; and the second codeword is a codeword with 4 antenna ports, 1 transmission layer, and a TPMI being a second specific value, the second specific value is at least one of 12 to 27; the first port group is {0, 1, 4, 5}, and the second port group is {2, 3, 6, 7}.

In some embodiments, the mapping relationship is a relationship of one-to-one correspondence.

In an embodiment of the disclosure, for 2 transmission layers, the specific 8-port partial coherent codeword is related to the first codeword and the second codeword.

In an embodiment of the disclosure, the mapping relationship exists between values corresponding to ports in the first port group of the first layer of the specific 8-port partial coherent codeword and values corresponding to ports of the first codeword.

For example, values of the first port group {0, 1, 4, 5} of the first layer of the specific 8-port partial coherent codeword correspond to values corresponding to ports of the first codeword respectively.

The first codeword is the codeword with 4 antenna ports, 1 transmission layer, and the TPMI being the first specific value, and the first specific value is at least one of 12 to 27.

For example, in a case that the first codeword is the codeword with 4 antenna ports, 1 transmission layer, and the TPMI being 12, values corresponding to ports of the first codeword are all 1, that is, values of the first port group {0, 1, 4, 5} of the first layer of the specific 8-port partial coherent codeword are all 1, and values in rows 1, 2, 5, and 6 in a first column of a precoding matrix corresponding to the specific 8-port partial coherent codeword are 1 respectively.

For example, the mapping relationship exists between values corresponding to ports in the second port group of the second layer of the specific partial coherent codeword and values corresponding to ports of the second codeword.

For example, values of the second port group {2, 3, 6, 7} of the second layer of the specific 8-port partial coherent codeword correspond to values corresponding to ports of the second codeword respectively.

The second codeword is the codeword with 4 antenna ports, 1 transmission layer, and the TPMI being the second specific value, and the second specific value is at least one of 12 to 27.

For example, in a case that the second codeword is the codeword with 4 antenna ports, 1 transmission layer, and the TPMI being 12, values corresponding to ports of the second codeword are all 1, that is, values of the second port group {2, 3, 6, 7} of the second layer of the specific 8-port partial coherent codeword are all 1, and values in rows 3, 4, 7, and 8 in a second column of a precoding matrix corresponding to the specific 8-port partial coherent codeword are 1 respectively.

For example, as shown in Table 7, a codebook with 4 antenna ports and 1 transmission layer is illustrated.

Table 7

| TPMI index | precoding matrix | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

It may be understood that the first codeword and the second codeword may be determined from Table 7.

The first codeword is the codeword with 4 antenna ports, 1 transmission layer, and the TPMI being the first specific value, the first specific value is at least one of 12 to 27; and the second codeword is the codeword with 4 antenna ports, 1 transmission layer, and the TPMI being the second specific value, the second specific value is at least one of 12 to 27.

For example, the first codeword is a codeword with 4 antenna ports, 1 transmission layer, and the TPMI being at least one of 12 to 27.

For example, the second codeword is a codeword with 4 antenna ports, 1 transmission layer, and the TPMI being at least one of 12 to 27.

In some embodiments, the first specific value is any one of a first value, a second value, a third value, or a fourth value; the second specific value is any one of the first value, the second value, the third value, or the fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27.

In an embodiment of the disclosure, the first codeword is the codeword with 4 antenna ports, 1 transmission layer, and the TPMI being the first specific value, and the first specific value is any one of the first value, the second value, the third value, or the fourth value. The first value is any one of 12, 16, 20, or 24, the second value is any one of 13, 17, 21, or 25, the third value is any one of 14, 18, 22, or 26, and the fourth value is any one of 15, 19, 23, or 27.

In an embodiment of the disclosure, the second codeword is the codeword with 4 antenna ports, 1 transmission layer, and the TPMI being the second specific value, and the second specific value is any one of the first value, the second value, the third value, or the fourth value. The first value is any one of 12, 16, 20, or 24, the second value is any one of 13, 17, 21, or 25, the third value is any one of 14, 18, 22, or 26, and the fourth value is any one of 15, 19, 23, or 27.

In some embodiments, in a case that the first specific value is the first value, the second specific value is any one of the first value, the second value, the third value, or the fourth value;

in a case that the first specific value is the second value, the second specific value is any one of the second value, the third value, or the fourth value;
in a case that the first specific value is the third value, the second specific value is any one of the third value or the fourth value; or
in a case that the first specific value is the fourth value, the second specific value is the fourth value.

In an embodiment of the disclosure, the first codeword is the codeword with 4 antenna ports, 1 transmission layer, and the TPMI being the first specific value. The second codeword is the codeword with 4 antenna ports, 1 transmission layer, and the TPMI being the second specific value

In a possible implementation, in a case that the first specific value is the second value, the second specific value is any one of the second value, the third value, or the fourth value.

In a possible implementation, in a case that the first specific value is the third value, the second specific value is any one of the third value or the fourth value.

In a possible implementation, in a case that the first specific value is the fourth value, the second specific value is the fourth value.

In some embodiments, for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of the first codeword, a mapping relationship exists between values corresponding to ports in a second port group of a second layer of the specific 8-port partial coherent codeword and values corresponding to ports of a first layer of the third codeword, and a mapping relationship exists between values corresponding to ports in the second port group of a third layer of the specific 8-port partial coherent codeword and values corresponding to ports of a second layer of the third codeword; or

for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of a first layer of the third codeword, a mapping relationship exists between values corresponding to ports in a first port group of a second layer of the specific 8-port partial coherent codeword and values corresponding to ports of a second layer of the third codeword, and a mapping relationship exists between values corresponding to ports in a second port group of a third layer of the specific 8-port partial coherent codeword and values corresponding to ports of the first codeword;
in which the first codeword is a codeword with 4 antenna ports, 1 transmission layer, and a TPMI being a first specific value, the first specific value is at least one of 12 to 27; the third codeword is a codeword with 4 antenna ports, 2 transmission layers, and a TPMI being a third specific value, the third specific value includes at least one of 14 to 21; the first port group is {0, 1, 4, 5}, and the second port group is {2, 3, 6, 7}.

In some embodiments, the mapping relationship is a relationship of one-to-one correspondence.

In an embodiment of the disclosure, for 3 transmission layers, the specific 8-port partial coherent codeword is related to the first codeword and the second codeword.

In an embodiment of the disclosure, the mapping relationship exists between values corresponding to ports in the first port group of the first layer of the specific 8-port partial coherent codeword and values corresponding to ports of the first codeword.

For example, values of the first port group {0, 1, 4, 5} of the first layer of the specific 8-port partial coherent codeword correspond to values corresponding to ports of the first codeword respectively.

The first codeword is the codeword with 4 antenna ports, 1 transmission layer, and the TPMI being the first specific value, and the first specific value is at least one of 12 to 27.

For example, in a case that the first codeword is the codeword with 4 antenna ports, 1 transmission layer, and the TPMI being 12, values corresponding to ports of the first codeword are all 1, that is, values of the first port group {0, 1, 4, 5} of the first layer of the specific 8-port partial coherent codeword are all 1, and values in rows 1, 2, 5, and 6 in a first column of a precoding matrix corresponding to the specific 8-port partial coherent codeword are 1 respectively

For example, the mapping relationship exists between values corresponding to ports in the second port group of the second layer of the specific 8-port partial coherent codeword and values corresponding to ports of the first layer of the third codeword.

The third codeword is the codeword with 4 antenna ports, 1 transmission layer, and the TPMI being the third specific value, and the third specific value is at least one of 14 to 21.

For example, in a case that the third codeword is the codeword with 4 antenna ports, 2 transmission layer, and the TPMI being 14, values corresponding to ports of the first layer of the third codeword are all 1, that is, values of the second port group {2, 3, 6, 7} of the second layer of the specific 8-port partial coherent codeword are all 1, and values in rows 3, 4, 7, and 8 in a second column of a precoding matrix corresponding to the specific 8-port partial coherent codeword are 1 respectively.

For example, the mapping relationship exists between values corresponding to ports in the second port group of the third layer of the specific 8-port partial coherent codeword and values corresponding to ports of the second layer of the third codeword.

The third codeword is the codeword with 4 antenna ports, 1 transmission layer, and the TPMI being the third specific value, and the third specific value is at least one of 14 to 21.

For example, in a case that the third codeword is the codeword with 4 antenna ports, 2 transmission layer, and the TPMI being 14, values corresponding to ports of the second layer of the third codeword are 1, 1, -1, and -1, that is, values of the second port group {2, 3, 6, 7} of the third layer of the specific 8-port partial coherent codeword are 1, 1, -1, and -1, and values in rows 1, 2, 5, and 6 in a third column of a precoding matrix corresponding to the specific 8-port partial coherent codeword are all 1, 1, -1, and -1.

For example, as shown in Table 8, a codebook with 4 antenna ports and 2 transmission layers is illustrated.

It may be understood that the first codeword may be determined from Table 7, and the third codeword may be determined from Table 8.

The third codeword is the codeword with 4 antenna ports, 2 transmission layer, and the TPMI being the third specific value, the third specific value includes at least one of 14 to 21.

For example, the first codeword is a codeword with 4 antenna ports, 1 transmission layer, and the TPMI being at least one of 12 to 27.

For example, the third codeword is a codeword with 4 antenna ports, 2 transmission layer, and the TPMI being at least one of 14 to 21.

Table 8

| TPMI index | precoding matrix | | | |
|---|---|---|---|---|
| 0 - 3 | $\frac{1}{2}\begin{bmatrix} 1 & 0 \\ 0 & 1 \\ 0 & 0 \\ 0 & 0 \end{bmatrix}$ | $\frac{1}{2}\begin{bmatrix} 1 & 0 \\ 0 & 0 \\ 0 & 1 \\ 0 & 0 \end{bmatrix}$ | $\frac{1}{2}\begin{bmatrix} 1 & 0 \\ 0 & 0 \\ 0 & 0 \\ 0 & 1 \end{bmatrix}$ | $\frac{1}{2}\begin{bmatrix} 0 & 0 \\ 1 & 0 \\ 0 & 1 \\ 0 & 0 \end{bmatrix}$ |

(continued)

| TPMI index | precoding matrix | | | |
|---|---|---|---|---|
| 4 - 7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & -j \end{bmatrix}$ | $\frac{1}{2}\begin{bmatrix} 1 & 0 \\ 0 & 1 \\ 1 & 0 \\ 0 & j \end{bmatrix}$ |
| 8 - 11 | $\frac{1}{2}\begin{bmatrix} 1 & 0 \\ 0 & 1 \\ -j & 0 \\ 0 & 1 \end{bmatrix}$ | $\frac{1}{2}\begin{bmatrix} 1 & 0 \\ 0 & 1 \\ -j & 0 \\ 0 & -1 \end{bmatrix}$ | $\frac{1}{2}\begin{bmatrix} 1 & 0 \\ 0 & 1 \\ -1 & 0 \\ 0 & -j \end{bmatrix}$ | $\frac{1}{2}\begin{bmatrix} 1 & 0 \\ 0 & 1 \\ -1 & 0 \\ 0 & j \end{bmatrix}$ |
| 12 - 15 | $\frac{1}{2}\begin{bmatrix} 1 & 0 \\ 0 & 1 \\ j & 0 \\ 0 & 1 \end{bmatrix}$ | $\frac{1}{2}\begin{bmatrix} 1 & 0 \\ 0 & 1 \\ j & 0 \\ 0 & -1 \end{bmatrix}$ | $\frac{1}{2\sqrt{2}}\begin{bmatrix} 1 & 1 \\ 1 & 1 \\ 1 & -1 \\ 1 & -1 \end{bmatrix}$ | $\frac{1}{2\sqrt{2}}\begin{bmatrix} 1 & 1 \\ 1 & 1 \\ j & -j \\ j & -j \end{bmatrix}$ |
| 16 - 19 | $\frac{1}{2\sqrt{2}}\begin{bmatrix} 1 & 1 \\ j & j \\ 1 & -1 \\ j & -j \end{bmatrix}$ | $\frac{1}{2\sqrt{2}}\begin{bmatrix} 1 & 1 \\ j & j \\ j & -j \\ -1 & 1 \end{bmatrix}$ | $\frac{1}{2\sqrt{2}}\begin{bmatrix} 1 & 1 \\ -1 & -1 \\ 1 & -1 \\ -1 & 1 \end{bmatrix}$ | $\frac{1}{2\sqrt{2}}\begin{bmatrix} 1 & 1 \\ -1 & -1 \\ j & -j \\ -j & j \end{bmatrix}$ |
| 20 - 21 | $\frac{1}{2\sqrt{2}}\begin{bmatrix} 1 & 1 \\ -j & -j \\ 1 & -1 \\ -j & j \end{bmatrix}$ | $\frac{1}{2\sqrt{2}}\begin{bmatrix} 1 & 1 \\ -j & -j \\ j & -j \\ 1 & -1 \end{bmatrix}$ | - | - |

In some embodiments, the first specific value is any one of a first value, a second value, a third value, or a fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27;
the third specific value is any one of a fifth value or a sixth value;
the fifth value is any one of 14, 16, 18, or 20; and
the sixth value is any one of 15, 17, 19, or 21.

In an embodiment of the disclosure, the first codeword is the codeword with 4 antenna ports, 1 transmission layer, and the TPMI being the first specific value, and the first specific value is any one of the first value, the second value, the third value, or the fourth value. The first value is any one of 12, 16, 20, or 24, the second value is any one of 13, 17, 21, or 25, the third value is any one of 14, 18, 22, or 26, and the fourth value is any one of 15, 19, 23, or 27.

In an embodiment of the disclosure, the third codeword is the codeword with 4 antenna ports, 2 transmission layer, and the TPMI being the third specific value, and the third specific value is any one of the fifth value or the sixth value. The fifth value is any one of 14, 16, 18, or 20, and the sixth value is any one of 15, 17, 19, or 21.

At S303, the network device sends indication information to the terminal.

In some embodiments, the indication information indicates the codebook configured by the network device for the terminal.

In an embodiment of the disclosure, the network device may send the indication information to the terminal, and the indication information may indicate the codebook configured for the terminal.

In some embodiments, the network device may determine the codebook for the terminal and send the indication information to the terminal, so as to indicate the codebook configured for the terminal.

In some embodiments, the network device may determine the codebook for the terminal based on the capability information of the terminal, and send the indication information to the terminal, so as to indicate the codebook configured for the terminal.

In some embodiments, the at least one codeword in the codebook supports the full-power uplink transmission by the terminal.

In an embodiment of the disclosure, the network device may send the indication information to the terminal, the indication information indicates the codebook configured by the network device for the terminal, and the at least one codeword in the codebook supports the full-power uplink transmission by the terminal.

In some embodiments, the network device may reuse an existing signaling or message to send the indication information to the terminal, or may also use a new signaling or message to send the indication information to the terminal.

For example, the network device sends an RRC signaling to the terminal, and the RRC signaling includes the indication information.

For example, the terminal receives the RRC signaling sent from the network device, and the RRC signaling includes the indication information.

In some embodiments, the codebook includes at least one of:

an 8-port partial coherent codebook with 1 transmission layer and 2 antenna port groups, and all 8-port fully coherent codewords with 1 transmission layer, in which the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, in which the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, in which the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, in which the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, in which the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, in which the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, in which the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, in which the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, in which the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, in which the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, in which the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, in which the terminal supports the 8-port partial coherent transmission with 3 transmission layers and 4 antenna port groups.

In some embodiments, for 1 transmission layer and an antenna configuration of the terminal being a first configuration, the first specific 8-port fully coherent codeword includes at least one of:

a codeword determined when a first parameter, a second parameter, and a third parameter are all 0;

a codeword determined when a first parameter is 1, and a second parameter and a third parameter are all 0;

a codeword determined when a first parameter and a second parameter are all 0, and a third parameter is 1;

a codeword determined when a first parameter and a second parameter are all 0, and a third parameter is 2;

a codeword determined when a first parameter and a second parameter are all 0, and a third parameter is 3;

a codeword determined when a first parameter is 1, a second parameter is 0, and a third parameter is 1;

a codeword determined when a first parameter is 1, a second parameter is 0, and a third parameter is 2; or

a codeword determined when a first parameter is 1, a second parameter is 0, and a third parameter is 3,

in which the first configuration is that, in one polarization direction, a number of antenna ports in a horizontal dimension is 4 and a number of antenna ports in a vertical dimension is 1; and

the first parameter indicates a beam index selected in the horizontal dimension, the second parameter indicates a beam index selected in the vertical dimension, and the third parameter indicates a co-phasing coefficient between two polarization directions.

In some embodiments, for 1 transmission layer and an antenna configuration of the terminal being a second configuration, the first specific 8-port fully coherent codeword includes at least one of:

a codeword determined when a first parameter, a second parameter, and a third parameter are all 0;

a codeword determined when a first parameter is 1, and a second parameter and a third parameter are all 0;

a codeword determined when a first parameter and a second parameter are all 0, and a third parameter is 1;

a codeword determined when a first parameter and a second parameter are all 0, and a third parameter is 2;

a codeword determined when a first parameter and a second parameter are all 0, and a third parameter is 3;

a codeword determined when a first parameter is 1, a second parameter is 0, and a third parameter is 1;

a codeword determined when a first parameter is 1, a second parameter is 0, and a third parameter is 2; or

a codeword determined when a first parameter is 1, a second parameter is 0, and a third parameter is 3,

in which the second configuration is that, in one polarization direction, a number of antenna ports in a horizontal dimension is 2 and a number of antenna ports in a vertical dimension is 2; and

the first parameter indicates a beam index selected in the horizontal dimension, the second parameter indicates a beam index selected in the vertical dimension, and the third parameter indicates a co-phasing coefficient between two polarization directions.

In some embodiments, for 1 transmission layer and an antenna configuration of the terminal being a first configuration, the second specific 8-port fully coherent codeword includes at least one of:

a codeword determined when a first parameter, a second parameter, and a third parameter are all 0;

a codeword determined when the first parameter and the second parameter are all 0, and the third parameter is 1;

a codeword determined when the first parameter and the second parameter are all 0, and the third parameter is 2; or

a codeword determined when the first parameter and the second parameter are all 0, and the third parameter is 3,

in which the first configuration is that, in one polarization direction, a number of antenna ports in a horizontal dimension is 4 and a number of antenna ports in a vertical dimension is 1; and

the first parameter indicates a beam index selected in the horizontal dimension, the second parameter indicates a beam index selected in the vertical dimension, and the third parameter indicates a co-phasing coefficient between two polarization directions.

In some embodiments, for 1 transmission layer and an antenna configuration of the terminal being a second configuration, the second specific 8-port fully coherent codeword includes at least one of:

a codeword determined when a first parameter, a second parameter, and a third parameter are all 0;

a codeword determined when the first parameter and the second parameter are all 0, and the third parameter is 1;

a codeword determined when the first parameter and the second parameter are all 0, and the third parameter is 2; or

a codeword determined when the first parameter and the second parameter are all 0, and the third parameter is 3,

in which the second configuration is that, in one polarization direction, a number of antenna ports in a horizontal dimension is 2 and a number of antenna ports in a vertical dimension is 2; and

the first parameter indicates a beam index selected in the horizontal dimension, the second parameter indicates a beam index selected in the vertical dimension, and the third parameter indicates a co-phasing coefficient between two polarization directions.

In some embodiments, for 2 transmission layers, the second specific 8-port fully coherent codeword includes at least one of:

a codeword determined when a first parameter, a second parameter, a third parameter, and a fourth parameter are all 0; or
a codeword determined when the first parameter, the second parameter, and the fourth parameter are all 0, and the third parameter is 1,
in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In some embodiments, for 3 transmission layers, the second specific 8-port fully coherent codeword includes at least one of:

a codeword determined when a first parameter, a second parameter, a third parameter, and a fourth parameter are all 0; or
a codeword determined when the first parameter, the second parameter, and the fourth parameter are all 0, and the third parameter is 1,
in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In some embodiments, for 3 transmission layers, the second specific 8-port fully coherent codeword includes at least one of:

a codeword determined when a first parameter, a second parameter, and a third parameter are all 0, and a fourth parameter is 1; or
a codeword determined when the first parameter and the second parameter are all 0, and the third parameter and the fourth parameter are all 1,
in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

In some embodiments, for 2 transmission layers, the specific 8-port partial coherent codeword is related to a first codeword and a second codeword, a mapping relationship exists between values corresponding to ports in a first port group of a first layer of the specific 8-port partial coherent codeword and values corresponding to ports of the first codeword, and a mapping relationship exists between values corresponding to ports in a second port group of a second layer of the specific 8-port partial coherent codeword and values corresponding to ports of the second codeword;

in which the first codeword is a codeword with 4 antenna ports, 1 transmission layer, and a TPMI being a first specific value, the first specific value is at least one of 12 to 27; and the second codeword is a codeword with 4 antenna ports, 1 transmission layer, and a TPMI being a second specific value, the second specific value is at least one of 12 to 27; the first port group is {0, 1, 4, 5}, and the second port group is {2, 3, 6, 7}.

In some embodiments, the first specific value is any one of a first value, a second value, a third value, or a fourth value; the second specific value is any one of the first value, the second value, the third value, or the fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27.

In some embodiments, in a case that the first specific value is the first value, the second specific value is any one of the first value, the second value, the third value, or the fourth value;

in a case that the first specific value is the second value, the second specific value is any one of the second value, the third value, or the fourth value;
in a case that the first specific value is the third value, the second specific value is any one of the third value or the fourth value; or

in a case that the first specific value is the fourth value, the second specific value is the fourth value.

In some embodiments, for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of the first codeword, a mapping relationship exists between values corresponding to ports in a second port group of a second layer of the specific 8-port partial coherent codeword and values corresponding to ports of a first layer of the third codeword, and a mapping relationship exists between values corresponding to ports in the second port group of a third layer of the specific 8-port partial coherent codeword and values corresponding to ports of a second layer of the third codeword; or

for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of a first layer of the third codeword, a mapping relationship exists between values corresponding to ports in a first port group of a second layer of the specific 8-port partial coherent codeword and values corresponding to ports of a second layer of the third codeword, and a mapping relationship exists between values corresponding to ports in a second port group of a third layer of the specific 8-port partial coherent codeword and values corresponding to ports of the first codeword;
in which the first codeword is a codeword with 4 antenna ports, 1 transmission layer, and a TPMI being a first specific value, the first specific value is at least one of 12 to 27; the third codeword is a codeword with 4 antenna ports, 2 transmission layers, and a TPMI being a third specific value, the third specific value includes at least one of 14 to 21; the first port group is {0, 1, 4, 5}, and the second port group is {2, 3, 6, 7}.

In some embodiments, the first specific value is any one of a first value, a second value, a third value, or a fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27;
the third specific value is any one of a fifth value or a sixth value;
the fifth value is any one of 14, 16, 18, or 20; and
the sixth value is any one of 15, 17, 19, or 21.

It should be noted that, for related descriptions of the contents included in the above codewords, reference may be made to the related descriptions of the contents included in the codewords in S302, which are not repeated herein.
In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.
In some embodiments, the terms such as "codebook", "codeword" and "precoding matrix" may be used interchangeably. For example, a codebook may be a collection of one or more codewords/precoding matrices.
In some embodiments, the terms such as "uplink", "physical uplink" may be used interchangeably. The terms such as "downlink", "physical downlink" may be used interchangeably. The terms such as "side", "sidelink", "side communication", "sidelink communication", "direct", "direct link", "direct communication", "direct link communication" may be used interchangeably.
In some embodiments, the terms such as "PUSCH", "uplink (UL) data" may be used interchangeably.
In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.
In some embodiments, the terms such as "send", "emit", "report", "issue", "transmit", "bidirectionally transmit", "send and/or receive" or the like may be used interchangeably.
In some embodiments, the terms such as "certain", "predetermined", "preset", "set", "indicated", "a", "any", "first", or the like may be used interchangeable. "Certain A", "predetermined A", "preset A", "set A", "indicated A", "an A", "any A", "first A" may be interpreted as A predefined in a protocol, or as A obtained via setting, configuration, or indication, or as certain A, a A, any A, or first A, etc., but is not limited herein.
The communication method in the embodiments of the disclosure may include at least one of the step S301 to the step S303. For example, the step S301 may be implemented as an independent embodiment, the step S302 may be implemented as an independent embodiment, the step S303 may be implemented as an independent embodiment, the step S301 and the step S302 may be implemented as an independent embodiment, and the step S302 and the step S303 may be implemented as an independent embodiment, which is not limited herein.

In some embodiments, the step S301 and the step S302 are optional, and one or more of the steps may be omitted or substituted in different embodiments.

In some embodiments, the step S301 is optional, and one or more of the steps may be omitted or substituted in different embodiments.

In some embodiments, reference to other optional implementations described before or after the description corresponding to FIG. 3 may be made.

FIG. 4A is a flowchart illustrating a method for indicating a codebook according to an embodiment of the disclosure. As shown in FIG. 4A, embodiments of the disclosure relate to a method for indicating a codebook. The method is performed by a terminal and includes the following step S401A.

At S401A, a codebook is determined.

In the embodiments of the disclosure, the terminal supports 8-port partial coherent transmission.

In some embodiments, the terminal supports 8-port partial coherent transmission with 2 antenna port groups and 1 transmission layer.

In some embodiments, the terminal supports 8-port partial coherent transmission with 4 antenna port groups and any one of 1 to 3 transmission layers.

In some embodiments, the terminal supports 8-port partial coherent transmission with 4 antenna port groups and 1 transmission layer.

In some embodiments, the terminal supports 8-port partial coherent transmission with 4 antenna port groups and 2 transmission layers.

In some embodiments, the terminal supports 8-port partial coherent transmission with 4 antenna port groups and 3 transmission layers.

In some embodiments, the terminal supports the 8-port partial coherent transmission with 2 antenna port groups and 1 transmission layer, and the 8-port partial coherent transmission with 4 antenna port groups and any one of 1 to 3 transmission layers.

In this embodiment of the disclosure, the terminal determines the codebook, in which at least one codeword in the codebook supports full-power uplink transmission by the terminal.

In this embodiment of the disclosure, the terminal determines the codebook and may use the at least one codeword in the codebook for transmission of an uplink signal or an uplink channel.

In some embodiments, the terminal determines a codebook agreed by a protocol.

In some embodiments, the terminal determines the codebook from upper layer(s).

In some embodiments, the terminal obtains the codebook by processing.

In some embodiments, S401A is omitted, and the terminal autonomously implements the function indicated by the codebook, or the above function is default or preconfigured.

In some embodiments, the terminal receives indication information sent from a network device, in which the indication information indicates the codebook configured by the network device for the terminal, and the at least one codeword in the codebook supports the full-power uplink transmission by the terminal.

In some embodiments, determining the codebook by the terminal includes at least one of:

determining that the codebook is an 8-port partial coherent codebook with 2 antenna port groups and 1 transmission layer to which all 8-port fully coherent codewords are added;
determining that the codebook is an 8-port partial coherent codebook with 4 antenna port groups and any one of 1 to 3 transmission layers to which all the 8-port fully coherent codewords are added;
determining that the codebook is an 8-port partial coherent codebook with 2 antenna port groups and 1 transmission layer to which a first specific 8-port fully coherent codeword is added;
determining that the codebook is an 8-port partial coherent codebook with 4 antenna port groups and any one of 1 to 3 transmission layers to which a second specific 8-port fully coherent codeword is added;
determining that the codebook is an 8-port partial coherent codebook with 4 antenna port groups and 2 or 3 transmission layers to which all 8-port partial coherent codewords with 2 transmission layers are added; or
determining that the codebook is an 8-port partial coherent codebook with 4 antenna port groups and 2 or 3 transmission layers to which a specific 8-port partial coherent codeword with 2 transmission layers is added.

In some embodiments, determining the codebook includes at least one of:

determining that the codebook is an 8-port partial coherent codebook with 2 antenna port groups and 1 transmission layer to which all 8-port fully coherent codewords with 1 transmission layer are added, in which the terminal supports 8-port partial coherent transmission with 2 antenna port groups and 1 transmission layer;

determining that the codebook is an 8-port partial coherent codebook with 4 antenna port groups and 1 transmission layer to which all the 8-port fully coherent codewords with 1 transmission layer are added, in which the terminal supports 8-port partial coherent transmission with 4 antenna port groups and 1 transmission layer;

determining that the codebook is an 8-port partial coherent codebook with 4 antenna port groups and 2 transmission layers to which all 8-port fully coherent codewords with 2 transmission layers are added, in which the terminal supports 8-port partial coherent transmission with 4 antenna port groups and 2 transmission layers;

determining that the codebook is an 8-port partial coherent codebook with 4 antenna port groups and 3 transmission layers to which all 8-port fully coherent codewords with 3 transmission layers are added, in which the terminal supports 8-port partial coherent transmission with 4 antenna port groups and 3 transmission layers;

determining that the codebook is an 8-port partial coherent codebook with 2 antenna port groups and 1 transmission layer to which a first specific 8-port fully coherent codeword with 1 transmission layer is added, in which the terminal supports the 8-port partial coherent transmission with 2 antenna port groups and 1 transmission layer;

determining that the codebook is an 8-port partial coherent codebook with 4 antenna port groups and 1 transmission layer to which a second specific 8-port fully coherent codeword with 1 transmission layer is added, in which the terminal supports the 8-port partial coherent transmission with 4 antenna port groups and 1 transmission layer;

determining that the codebook is an 8-port partial coherent codebook with 4 antenna port groups and 2 transmission layers to which a second specific 8-port fully coherent codeword with 2 transmission layers is added, in which the terminal supports the 8-port partial coherent transmission with 4 antenna port groups and 2 transmission layers;

determining that the codebook is an 8-port partial coherent codebook with 4 antenna port groups and 3 transmission layers to which a second specific 8-port fully coherent codeword with 3 transmission layers is added, in which the terminal supports the 8-port partial coherent transmission with 4 antenna port groups and 3 transmission layers;

determining that the codebook is an 8-port partial coherent codebook with 4 antenna port groups and 2 transmission layers to which all 8-port partial coherent codewords with 2 transmission layers and 2 antenna port groups are added, in which the terminal supports the 8-port partial coherent transmission with 4 antenna port groups and 2 transmission layers;

determining that the codebook is an 8-port partial coherent codebook with 4 antenna port groups and 3 transmission layers to which all 8-port partial coherent codewords with 3 transmission layers and 2 antenna port groups are added, in which the terminal supports the 8-port partial coherent transmission with 4 antenna port groups and 3 transmission layers;

determining that the codebook is an 8-port partial coherent codebook with 4 antenna port groups and 2 transmission layers to which a specific 8-port partial coherent codeword with 2 transmission layers and 2 antenna port groups is added, in which the terminal supports the 8-port partial coherent transmission with 4 antenna port groups and 2 transmission layers; or

determining that the codebook is an 8-port partial coherent codebook with 4 antenna port groups and 3 transmission layers to which a specific 8-port partial coherent codeword with 3 transmission layers and 2 antenna port groups is added, in which the terminal supports the 8-port partial coherent transmission with 4 antenna port groups and 3 transmission layers.

In some embodiments, the codebook includes at least one of:

an 8-port partial coherent codebook with 1 transmission layer and 2 antenna port groups, and all 8-port fully coherent codewords with 1 transmission layer, in which the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, in which the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, in which the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, in which the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, in which the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, in which the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, in which the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, in which the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, in which the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, in which the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, in which the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, in which the terminal supports the 8-port partial coherent transmission with 3 transmission layers and 4 antenna port groups.

It should be noted that, for related descriptions of the 8-port fully coherent codeword, the first specific 8-port fully coherent codeword, the second specific 8-port fully coherent codeword, the 8-port partial coherent codeword, and the specific 8-port partial coherent codeword, reference may be made to the related descriptions in the above embodiments, which are not repeated herein.

It should be noted that, for optional implementations of S401A, reference may be made to the optional implementations of S303 in FIG. 3 and other related parts in embodiments associated with FIG. 3, which are not repeated herein.

By implementing the embodiments of the disclosure, the terminal determines the codebook. The terminal supports the 8-port partial coherent transmission with 2 antenna port groups and 1 transmission layer, and/or the 8-port partial coherent transmission with 4 antenna port groups and any one of 1 to 3 transmission layers. The at least one codeword in the codebook supports the full-power uplink transmission by the terminal. Thus, the terminal may achieve the full-power uplink transmission, which may increase the transmission power of the terminal and improve the uplink transmission performance.

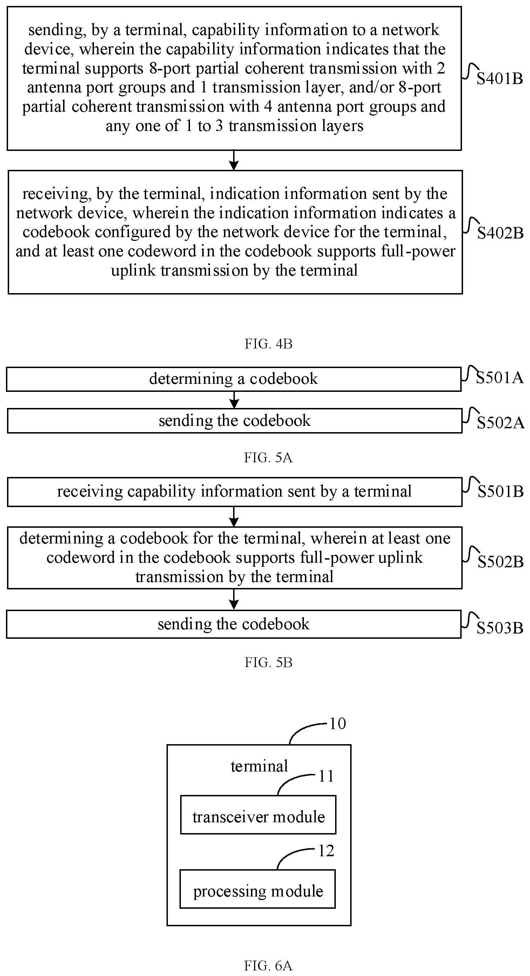

FIG. 4B is a flowchart illustrating a method for indicating a codebook according to an embodiment of the disclosure. As shown in FIG. 4B, embodiments of the disclosure relate to a method for indicating a codebook. The method includes the following steps S401B to S402B.

At S401B, a terminal sends capability information to a network device, in which the capability information indicates that the terminal supports 8-port partial coherent transmission with 2 antenna port groups and 1 transmission layer, and/or 8-port partial coherent transmission with 4 antenna port groups and any one of 1 to 3 transmission layers.

In this embodiment of the disclosure, the terminal may send the capability information to the network device. The capability information may indicate that the terminal supports the 8-port partial coherent transmission with 2 antenna port groups and 1 transmission layer, and/or the 8-port partial coherent transmission with 4 antenna port groups and any one of 1 to 3 transmission layers.

It may be understood that the terminal supporting the 8-port partial coherent transmission with 2 antenna port groups and 1 transmission layer may mean that the terminal supports using an 8-port partial coherent codebook with 2 antenna port groups and 1 transmission layer for uplink transmission.

It may be understood that the terminal supporting the 8-port partial coherent transmission with 4 antenna port groups and any one of 1 to 3 transmission layers may mean that the terminal supports using an 8-port partial coherent codebook with 4 antenna port groups and any one of 1 to 3 transmission layers for uplink transmission.

It should be noted that, for optional implementations of S401B, reference may be made to the optional implementations of S301 in FIG. 3 and other related parts in the embodiments associated with FIG. 3, which are not repeated herein.

At S402B, the terminal receives indication information sent from the network device, in which the indication information indicates a codebook configured by the network device for the terminal, and at least one codeword in the codebook supports full-power uplink transmission by the terminal.

In this embodiment of the disclosure, the terminal may receive the indication information sent from the network device. The indication information indicates the codebook configured by the network device for the terminal, and the at least one codeword in the codebook supports the full-power uplink transmission by the terminal. Thus, the terminal may achieve the full-power uplink transmission, which may increase the transmission power of the terminal and improve the uplink transmission performance.

In some embodiments, after sending the capability information to the network device, the terminal may receive the indication information sent from the network device.

It should be noted that, for optional implementations of S402B, reference may be made to the optional implementations of S303 in FIG. 3 and other related parts in the embodiments associated with FIG. 3, which are not repeated herein.

The communication method involved in the embodiments of the disclosure may include at least one of S401B to S402B. For example, S402B may be implemented as an independent embodiment, which is not limited herein.

In some embodiments, S401B is optional, and one or more of the steps may be omitted or substituted in different embodiments.

By implementing the embodiments of the disclosure, the terminal sends the capability information to the network device, in which the capability information indicates that the terminal supports the 8-port partial coherent transmission with 2 antenna port groups and 1 transmission layer, and/or the 8-port partial coherent transmission with 4 antenna port groups and any one of 1 to 3 transmission layers. The terminal receives the indication information sent from the network device, in which the indication information indicates the codebook configured by the network device for the terminal, and the at least one codeword in the codebook supports the full-power uplink transmission by the terminal. Thus, the terminal may achieve the full-power uplink transmission, which may increase the transmission power of the terminal and improve the uplink transmission performance.

FIG. 5A is a flowchart illustrating a method for indicating a codebook according to an embodiment of the disclosure. As shown in FIG. 5A, embodiments of the disclosure relate to a method for indicating a codebook. The method is performed by a network device and includes the following steps S501A to S502A.

At S501A, a codebook is determined.

In this embodiment of the disclosure, the network device determines the codebook, and at least one codeword in the codebook supports full-power uplink transmission by a terminal.

In the embodiments of the disclosure, the terminal supports 8-port partial coherent transmission.

In some embodiments, the terminal supports 8-port partial coherent transmission with 4 antenna port groups and any one of 1 to 3 transmission layers.

In some embodiments, the terminal supports 8-port partial coherent transmission with 4 antenna port groups and 1 transmission layer.

In some embodiments, the terminal supports 8-port partial coherent transmission with 4 antenna port groups and 2 transmission layers.

In some embodiments, the terminal supports 8-port partial coherent transmission with 4 antenna port groups and 3 transmission layers.

In some embodiments, the terminal supports the 8-port partial coherent transmission with 2 antenna port groups and 1 transmission layer, and the 8-port partial coherent transmission with 4 antenna port groups and any one of 1 to 3 transmission layers.

In some embodiments, the network device may determine a codebook agreed by a protocol.

In some embodiments, the network device may determine the codebook from upper layer(s).

In some embodiments, the network device may determine the codebook by processing.

In some embodiments, the network device may determine the codebook for the terminal.

In some embodiments, the network device may determine the codebook based on a capability of the terminal. For example, the capability of the terminal includes that the terminal supports the 8-port partial coherent transmission with 2 antenna port groups and 1 transmission layer, and/or the 8-port partial coherent transmission with 4 antenna port groups and any one of 1 to 3 transmission layers.

It should be noted that, for optional implementations of S501A, reference may be made to optional implementations of S302 in FIG. 3 and other related parts in the embodiments associated with FIG. 3, which are not repeated herein.

At S502A, the codebook is sent.

In some embodiments, the network device sends the codebook to the terminal, but is not limited herein, and may also send the codebook to other entities.

In some embodiments, the network device sends indication information to the terminal, in which the indication information indicates the codebook configured by the network device for the terminal, and the at least one codeword in the codebook supports the full-power uplink transmission by the terminal.

It should be noted that, for optional implementations of S502A, reference may be made to optional implementations of S303 in FIG. 3 and other related parts in the embodiments associated with FIG. 3, which are not repeated herein.

The communication method involved in the embodiments of the disclosure may include at least one of S501A to S502A. For example, S501A may be implemented as an independent embodiment, and S502A may be implemented as an independent embodiment, which is not limited herein.

In some embodiments, S501A is optional, and one or more of the steps may be omitted or substituted in different embodiments.

In some embodiments, S502A is optional, and one or more of the steps may be omitted or substituted in different embodiments.

By implementing the embodiments of the disclosure, the network device determines the codebook, in which the at least one codeword in the codebook supports full-power uplink transmission by the terminal, and the terminal supports the 8-port partial coherent transmission with 2 antenna port groups and 1 transmission layer, and/or the 8-port partial coherent transmission with 4 antenna port groups and any one of 1 to 3 transmission layers. The network device sends the codebook. Thus, the terminal may achieve the full-power uplink transmission, which may increase the transmission power of the terminal and improve the uplink transmission performance.

FIG. 5B is a flowchart illustrating a method for indicating a codebook according to an embodiment of the disclosure. As shown in FIG. 5B, embodiments of the disclosure relate to a method for indicating a codebook. The method is performed by a network device and includes the following steps S501B to S503B.

At S501B, capability information sent from a terminal is received.

In some embodiments, the capability information indicates that the terminal supports 8-port partial coherent transmission with 2 antenna port groups and 1 transmission layer, and/or 8-port partial coherent transmission with 4 antenna port groups and any one of 1 to 3 transmission layers.

In this embodiment of the disclosure, the network device may receive the capability information sent from the terminal. The capability information indicates that the terminal supports the 8-port partial coherent transmission with 2 antenna port groups and 1 transmission layer, and/or the 8-port partial coherent transmission with 4 antenna port groups and any one of 1 to 3 transmission layers. Thus, the network device may determine that the terminal supports the 8-port partial coherent transmission with 2 antenna port groups and 1 transmission layer, and/or the 8-port partial coherent transmission with 4 antenna port groups and any one of 1 to 3 transmission layers.

At S502B, a codebook is determined, in which at least one codeword in the codebook supports full-power uplink transmission by the terminal.

It should be noted that, for optional implementations of S502B, reference may be made to optional implementations of S302 in FIG. 3 and other related parts in the embodiments associated with FIG. 3, which are not repeated herein.

At S503B, the codebook is sent.

It should be noted that for optional implementations of S503B, reference may be made to optional implementations of S303 in FIG. 3 and other related parts in the embodiments associated with FIG. 3, which are not repeated herein.

The communication method involved in the embodiments of the disclosure may include at least one of S501B to S503B. For example, S501B may be implemented as an independent embodiment, S502B may be implemented as an independent embodiment, and S503B may be implemented as an independent embodiment, which is not limited herein.

The communication method involved in the embodiments of the disclosure may include at least one of S501B to S503B. For example, S501B may be implemented as an independent embodiment, S502B may be implemented as an independent embodiment, S503B may be implemented as an independent embodiment, S501B and S502B may be implemented as an independent embodiment, and S502B and S503B may be implemented as an independent embodiment, which is not limited herein.

In some embodiments, S501B and S502B are optional, and one or more of the steps may be omitted or substituted in different embodiments.

In some embodiments, S501B is optional, and one or more of the steps may be omitted or substituted in different embodiments.

By implementing the embodiments of the disclosure, the network device receives the capability information sent from the terminal, in which the capability information indicates that the terminal supports the 8-port partial coherent transmission with 2 antenna port groups and 1 transmission layer, and/or the 8-port partial coherent transmission with 4 antenna port groups and any one of 1 to 3 transmission layers; the network device determines the codebook, in which the at least one codeword in the codebook supports full-power uplink transmission by the terminal; and the network device sends the codebook. Thus, the terminal may achieve the full-power uplink transmission, which may increase the transmission power of the terminal and improve the uplink transmission performance.

For ease of understanding embodiments of the disclosure, the following exemplary embodiments are provided.

In an exemplary embodiment, in the case that the number of transmission layers (or rank) is equal to 1, a terminal uses a codebook for transmission of an uplink signal or an uplink channel. When an antenna configuration is a first configuration and (N1, N2) = (4, 1), the codebook includes at least one of Option 1, Option 2, or Option 3.

Option 1: all 8Tx fully coherent codewords are introduced into an 8Tx partial coherent codebook (Ng=2).

Option 2: eight 8Tx fully coherent codewords are introduced into the 8Tx partial coherent codebook (Ng=2), that is, codewords corresponding to i1, 1= {0, 1}, i1, 2= {0}, i2= {0, 1, 2, 3}.

Option 3: a subset of the Option 2.

When an antenna configuration is a second configuration and (N1, N2) = (2, 2), the codebook includes at least one of Option 1, Option 2, or Option 3.

Option 1: all 8Tx fully coherent codewords are introduced into the 8Tx partial coherent codebook (Ng=2).

Option 2: eight 8Tx fully coherent codewords are introduced into the 8Tx partial coherent codebook (Ng=2), that is, codewords corresponding to i1, 1= {0, 1}, i1, 2= {0}, i2= {0, 1, 2, 3}.

Option 3: a subset of Option 2.

In an exemplary embodiment, in the case that the number of transmission layers (or rank) is equal to 1, a terminal uses a codebook for transmission of the uplink signal or the uplink channel. The codebook includes at least one of Option 1, Option 2, or Option 3.

Option 1: four 8-port fully coherent codewords are introduced into an 8-port partial coherent codebook (Ng=4).

When the antenna configuration is a first configuration and (N1, N2) = (4, 1), codewords corresponding to i1, 1= {0}, i1, 2= {0}, i2= {0, 1, 2, 3} are selected.

When the antenna configuration is a second configuration and (N1, N2) = (2, 2), codewords corresponding to i1, 1= {0}, i1, 2= {0}, i2= {0, 1, 2, 3} are selected.

Option 2: all 8-port fully coherent codewords are introduced into the 8-port partial coherent codebook (Ng=4).

Option 3: a subset of Option 1.

In an exemplary embodiment, in the case that the number of transmission layers (or rank) is equal to 2, a terminal uses a codebook for transmission of the uplink signal or the uplink channel. The codebook includes at least one of Option 1, Option 2, Option 3, Option 4, Option 5, or Option 6.

Option 1: two 8-port (Tx) fully coherent codewords are introduced into an 8-port partial coherent codebook with 4 antenna port groups (8Tx partial coherent codebook (Ng=4)).

When the antenna configuration (N1, N2) is equal to (4, 1), codewords corresponding to i1, 1= {0}, i1, 2= {0}, i1, 3= {0}, i2= {0, 1} are selected.

When the antenna configuration (N1, N2) is equal to (2, 2), codewords corresponding to i1, 1= {0}, i1, 2= {0}, i1, 3= {0}, i2= {0, 1} are selected.

Option 2: all 8Tx fully coherent codewords are introduced into the 8Tx partial coherent codebook (Ng=4).

Option 3: sixteen partial coherent codewords (Ng=2) are introduced into the 8Tx partial coherent codebook (Ng=4).

In a case that the layer division is 1+1, A1 and A2 are codewords with TPMI=12, 13, 14, 15 in the R15 uplink 4Tx 1-layer codebook.

Option 4: ten partial coherent codewords (Ng=2) are introduced into the 8Tx partial coherent codebook (Ng=4).

In a case that the layer division is 1+1, A1 and A2 are codewords with TPMI =12, 13, 14, 15 in the R15 uplink 4Tx 1-layer codebook, from which codewords that are identical after column permutation of the codewords are deleted.

Option 5: all 8Tx partial coherent codewords (Ng=2) are introduced into the 8Tx partial coherent codebook (Ng=4).

Option 6: a subset of Option 1, Option 3, or Option 4.

**In** an exemplary embodiment, in the case that the number of transmission layers (or rank) is 3, a terminal uses a codebook for transmission of the uplink signal or the uplink channel. The codebook includes at least one of Option 1, Option 2, Option 3, Option 4, or Option 5:

Option 1: two 8Tx fully coherent codewords are introduced into an 8Tx partial coherent codebook (Ng=4).

Option 1-1: for different (N1, N2) antenna configurations, fully coherent codewords with the smallest index value are introduced.

When the antenna configuration (N1, N2) is equal to (4, 1), codewords corresponding to i1, 1= {0}, i1, 2= {0}, i1, 3= {0}, i2= {0, 1} are selected.

When the antenna configuration (N1, N2) is equal to (2, 2), codewords corresponding to i1, 1= {0}, i1, 2= {0}, i1, 3= {0}, i2= {0, 1} are selected.

Option 1-2: for different (N1, N2) antenna configurations, the same fully coherent codewords with the smallest index value are introduced.

When the antenna configuration (N1, N2) is equal to (4, 1), codewords corresponding to i1, 1= {0}, i1, 2= {0}, i1, 3= {1}, i2= {0, 1} are selected.

When the antenna configuration (N1, N2) is equal to (2, 2), codewords corresponding to i1, 1= {0}, i1, 2= {0}, i1, 3= {1}, i2= {0, 1} are selected.

Option 2: all 8Tx fully coherent codewords are introduced into the 8Tx partial coherent codebook (Ng=4).

Option 3: eight partial coherent codewords (Ng=2) are introduced into the 8Tx partial coherent codebook (Ng=4).

In a case that the layer division is 1+2, A1 includes codewords with TPMI=12, 13, 14, 15 in the R15 uplink 4Tx 1-layer codebook, and A2 includes codewords with TPMI=14, 15 in the R15 uplink 4Tx 2-layer codebook.

In a case that the layer division is 2+ 1, A1 includes codewords with TPMI=14, 15 (as the first two yellow-green codewords in Table 9) in the R15 uplink 4Tx 2-layer codebook, and A2 includes codewords with TPMI=12, 13, 14, 15 in the R15 uplink 4Tx 1-layer codebook.

Option 4: all 8Tx partial coherent codewords (Ng=2) are introduced into the 8Tx partial coherent codebook (Ng=4).

Option 5 includes a subset of Option 1 or Option 3.

The embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6A is a block diagram illustrating a terminal according to an embodiment of the disclosure. As shown in FIG. 6A, the terminal 10 may include at least one of: a transceiver module 11, or a processing module 12.

In some embodiments, the processing module 12 is configured to determine a codebook, in which at least one codeword in the codebook supports full-power uplink transmission by the terminal, and the terminal supports 8-port partial coherent transmission.

The transceiver module 11 is configured to perform at least one of the communication steps (e.g., S301 to S303, but is not limited herein) such as sending and/or receiving performed by the terminal 10 in any of the above methods, which is not repeated herein. Optionally, the processing module 12 is configured to perform at least one of other steps (e.g., S301 to S303, but is not limited herein) performed by the network device 20 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

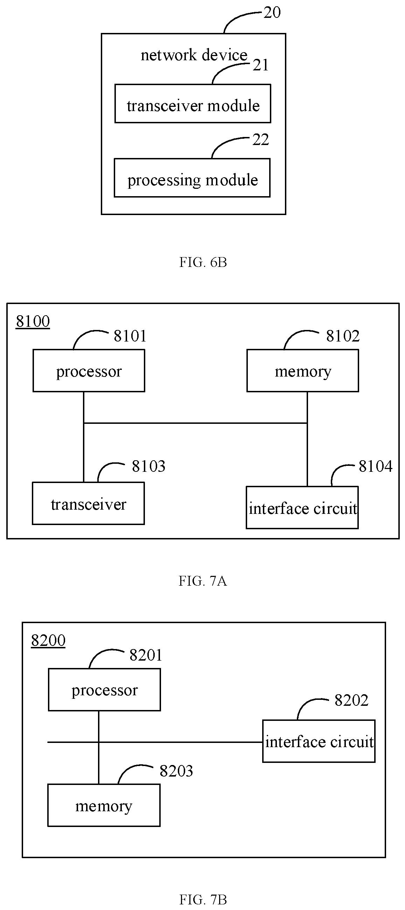

FIG. 6B is a block diagram illustrating a network device according to an embodiment of the disclosure. As shown in FIG. 6B, the network device 20 may include at least one of: a transceiver module 21, or a processing module 22.

In some embodiments, the processing module 22 is configured to determine a codebook for a terminal, in which at least one codeword in the codebook supports full-power uplink transmission by the terminal, and the terminal supports 8-port partial coherent transmission.

The transceiver module 21 is configured to perform at least one of the communication steps (e.g., S301 to S303, but is not limited herein) such as sending and/or receiving performed by the network device 20 in any of the above methods, which is not repeated herein. Optionally, the processing module 22 is configured to perform at least one of other steps (e.g., S301 to S303, but is not limited herein) performed by the network device 20 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

FIG. 7A is a block diagram illustrating a communication device 8100 according to an embodiment of the disclosure. The communication device 8100 may be a network device, or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 7A, the communication device 8100 may include one or more processors 8101. The processor 8101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The communication device 8100 is configured to execute any one of the above methods.

Optionally, the communication device 8100 further includes one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps (e.g., S301 to S303, but is not limited herein) such as sending and/or receiving in the above method, and the processor 8101 performs at least one of other steps (e.g., S301 to S303, but is not limited herein).

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 8100 further includes one or more interface circuits 8104. Optionally, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a terminal, but a scope of the communication device 8100 in the disclosure is not limited to this, and a structure of the communication device 8100 may not be limited by FIG. 7A. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 7B is a block diagram illustrating a chip 8200 according to an embodiment of the disclosure. For a case where the communication device 8100 may be a chip or a chip system, reference may be made to the block diagram of the chip 8200 shown in FIG. 7B, but not limited to this.

The chip 8200 includes one or more processors 8201. The chip 8200 is configured to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send signals to the memory 8203 or other devices. For example, the interface circuit 8202 may read the instructions stored in the memory 8203 and send the instructions to the processor 8201.

In some embodiments, the interface circuit 8202 performs at least one of the communication steps such as sending and/or receiving in the above method (e.g., S301 to S303, but is not limited herein), and the processor 6201 performs at least one of other steps (e.g., S301 to S303, but is not limited herein).

In some embodiments, terms such as interface circuit, interface, transceiver pin, transceiver, etc. may be used interchangeably.

In some embodiments, the chip 8200 further includes one or more memories 8203 for storing instructions. Optionally, all or some of the memories 8203 may be located outside the chip 8200.

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the computer program is running on a computer, the computer is caused to implement any one of the above methods.

Those skilled in the related art may realize that, in combination with the examples described in the embodiments of the disclosure, units and algorithm steps may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered as going beyond the scope of the disclosure.

Those skilled in the related art may clearly understand that, for a specific working process of a system, an apparatus and a unit described above, reference may be made to a corresponding process in the above method embodiments, which is not repeated herein.

The above are only implementations of the disclosure. However, the protection scope of the disclosure is not limited herein. Changes and substitutions that may be easily considered by those skilled in the art shall be contained within the protection scope of the disclosure. Thus, the protection scope of the disclosure shall be subject to the protection scope of claims.

**Claims**

1.  A method for indicating a codebook, performed by a terminal, comprising:
    determining a codebook, wherein at least one codeword in the codebook supports full-power uplink transmission by the terminal, and the terminal supports 8-port partial coherent transmission.

2.  The method according to claim 1, wherein determining the codebook comprises:

    receiving indication information sent from a network device, wherein the indication information indicates the codebook; and
    determining the codebook based on the indication information.

3.  The method according to claim 1 or 2, wherein the terminal supports 8-port partial coherent transmission with 2 antenna port groups and 1 transmission layer, and/or 8-port partial coherent transmission with 4 antenna port groups and any one of 1 to 3 transmission layers.

4.  The method according to any one of claims 1 to 3, further comprising:
    sending capability information to the network device, wherein the capability information indicates that the terminal supports the 8-port partial coherent transmission with 2 antenna port groups and 1 transmission layer, and/or the 8-port partial coherent transmission with 4 antenna port groups and any one of 1 to 3 transmission layers.

5.  The method according to any one of claims 1 to 4, wherein determining the codebook comprises at least one of:

    determining that the codebook is an 8-port partial coherent codebook with 2 antenna port groups and 1 transmission layer to which all 8-port fully coherent codewords with 1 transmission layer are added, wherein the terminal supports 8-port partial coherent transmission with 2 antenna port groups and 1 transmission layer;
    determining that the codebook is an 8-port partial coherent codebook with 4 antenna port groups and 1 transmission layer to which all the 8-port fully coherent codewords with 1 transmission layer are added, wherein the terminal supports 8-port partial coherent transmission with 4 antenna port groups and 1 transmission layer;

determining that the codebook is an 8-port partial coherent codebook with 4 antenna port groups and 2 transmission layers to which all 8-port fully coherent codewords with 2 transmission layers are added, wherein the terminal supports 8-port partial coherent transmission with 4 antenna port groups and 2 transmission layers;

determining that the codebook is an 8-port partial coherent codebook with 4 antenna port groups and 3 transmission layers to which all 8-port fully coherent codewords with 3 transmission layers are added, wherein the terminal supports 8-port partial coherent transmission with 4 antenna port groups and 3 transmission layers;

determining that the codebook is an 8-port partial coherent codebook with 2 antenna port groups and 1 transmission layer to which a first specific 8-port fully coherent codeword with 1 transmission layer is added, wherein the terminal supports the 8-port partial coherent transmission with 2 antenna port groups and 1 transmission layer;

determining that the codebook is an 8-port partial coherent codebook with 4 antenna port groups and 1 transmission layer to which a second specific 8-port fully coherent codeword with 1 transmission layer is added, wherein the terminal supports the 8-port partial coherent transmission with 4 antenna port groups and 1 transmission layer;

determining that the codebook is an 8-port partial coherent codebook with 4 antenna port groups and 2 transmission layers to which a second specific 8-port fully coherent codeword with 2 transmission layers is added, wherein the terminal supports the 8-port partial coherent transmission with 4 antenna port groups and 2 transmission layers;

determining that the codebook is an 8-port partial coherent codebook with 4 antenna port groups and 3 transmission layers to which a second specific 8-port fully coherent codeword with 3 transmission layers is added, wherein the terminal supports the 8-port partial coherent transmission with 4 antenna port groups and 3 transmission layers;

determining that the codebook is an 8-port partial coherent codebook with 4 antenna port groups and 2 transmission layers to which all 8-port partial coherent codewords with 2 transmission layers and 2 antenna port groups are added, wherein the terminal supports the 8-port partial coherent transmission with 4 antenna port groups and 2 transmission layers;

determining that the codebook is an 8-port partial coherent codebook with 4 antenna port groups and 3 transmission layers to which all 8-port partial coherent codewords with 3 transmission layers and 2 antenna port groups are added, wherein the terminal supports the 8-port partial coherent transmission with 4 antenna port groups and 3 transmission layers;

determining that the codebook is an 8-port partial coherent codebook with 4 antenna port groups and 2 transmission layers to which a specific 8-port partial coherent codeword with 2 transmission layers and 2 antenna port groups is added, wherein the terminal supports the 8-port partial coherent transmission with 4 antenna port groups and 2 transmission layers; or

determining that the codebook is an 8-port partial coherent codebook with 4 antenna port groups and 3 transmission layers to which a specific 8-port partial coherent codeword with 3 transmission layers and 2 antenna port groups is added, wherein the terminal supports the 8-port partial coherent transmission with 4 antenna port groups and 3 transmission layers.

6. The method according to any one of claims 1 to 5, wherein the codebook comprises at least one of:

an 8-port partial coherent codebook with 1 transmission layer and 2 antenna port groups, and all 8-port fully coherent codewords with 1 transmission layer, wherein the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, wherein the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, wherein the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, wherein the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, wherein the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, wherein the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, wherein the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, wherein the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, wherein the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, wherein the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, wherein the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, wherein the terminal supports the 8-port partial coherent transmission with 3 transmission layers and 4 antenna port groups.

7. The method according to claim 5 or 6, wherein for 1 transmission layer and an antenna configuration of the terminal being a first configuration, the first specific 8-port fully coherent codeword comprises at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
wherein the first configuration is that, in one polarization direction, an antenna port count in a horizontal dimension is 4 and an antenna port count in a vertical dimension is 1; and
the first parameter indicates a beam index selected in the horizontal dimension, the second parameter indicates a beam index selected in the vertical dimension, and the third parameter indicates a co-phasing coefficient between two polarization directions.

8. The method according to claim 5 or 6, wherein for 1 transmission layer and an antenna configuration of the terminal being a second configuration, the first specific 8-port fully coherent codeword comprises at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
wherein the second configuration is that, in one polarization direction, an antenna port count in a horizontal dimension is 2 and an antenna port count in a vertical dimension is 2; and
the first parameter indicates a beam index selected in the horizontal dimension, the second parameter indicates a beam index selected in the vertical dimension, and the third parameter indicates a co-phasing coefficient between two polarization directions.

9. The method according to any one of claims 5 to 8, wherein for 1 transmission layer and an antenna configuration of the terminal being a first configuration, the second specific 8-port fully coherent codeword comprises at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3, wherein the first configuration is that, in one polarization direction, an antenna port count in a horizontal dimension is 4 and an antenna port count in a vertical dimension is 1; and
the first parameter indicates a beam index selected in the horizontal dimension, the second parameter indicates a beam index selected in the vertical dimension, and the third parameter indicates a co-phasing coefficient between two polarization directions.

10. The method according to any one of claims 5 to 8, wherein for 1 transmission layer and an antenna configuration of the terminal being a second configuration, the second specific 8-port fully coherent codeword comprises at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3, wherein the second configuration is that, in one polarization direction, an antenna port count in a horizontal dimension is 2 and an antenna port count in a vertical dimension is 2; and
the first parameter indicates a beam index selected in the horizontal dimension, the second parameter indicates a beam index selected in the vertical dimension, and the third parameter indicates a co-phasing coefficient between two polarization directions.

11. The method according to any one of claims 5 to 10, wherein for 2 transmission layers, the second specific 8-port fully coherent codeword comprises at least one of:

a codeword determined when a first parameter, a second parameter, a third parameter, and a fourth parameter are all 0; or
a codeword determined when the first parameter, the second parameter, and the fourth parameter are all 0, and the third parameter is 1,
wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

12. The method according to any one of claims 5 to 11, wherein for 3 transmission layers, the second specific 8-port fully coherent codeword comprises at least one of:

a codeword determined when a first parameter, a second parameter, a third parameter, and a fourth parameter are all 0; or
a codeword determined when the first parameter, the second parameter, and the fourth parameter are all 0, and the third parameter is 1,
wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

13. The method according to any one of claims 5 to 11, wherein for 3 transmission layers, the second specific 8-port fully coherent codeword comprises at least one of:

a codeword determined when a first parameter, a second parameter, and a third parameter are all 0, and a fourth parameter is 1; or
a codeword determined when the first parameter and the second parameter are all 0, and the third parameter and the fourth parameter are all 1,
wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

14. The method according to any one of claims 5 to 13, wherein for 2 transmission layers, the specific 8-port partial coherent codeword is related to a first codeword and a second codeword, a mapping relationship exists between values corresponding to ports in a first port group of a first layer of the specific 8-port partial coherent codeword and values corresponding to ports of the first codeword, and a mapping relationship exists between values corresponding to ports in a second port group of a second layer of the specific 8-port partial coherent codeword and values corresponding to ports of the second codeword;

wherein the first codeword is a codeword with 4 antenna ports, 1 transmission layer, and a transmit precoding matrix indicator (TPMI) being a first specific value, the first specific value is at least one of 12 to 27; and the second codeword is a codeword with 4 antenna ports, 1 transmission layer, and a TPMI being a second specific value, the second specific value is at least one of 12 to 27;
the first port group is {0, 1, 4, 5}, and the second port group is {2, 3, 6, 7}.

15. The method according to claim 14, wherein

the first specific value is any one of a first value, a second value, a third value, or a fourth value; the second specific value is any one of the first value, the second value, the third value, or the fourth value;
the first value is any one of 12, 16, 20, or 24;
the second value is any one of 13, 17, 21, or 25;
the third value is any one of 14, 18, 22, or 26; and
the fourth value is any one of 15, 19, 23, or 27.

16. The method according to claim 15, wherein

in a case that the first specific value is the first value, the second specific value is any one of the first value, the second value, the third value, or the fourth value;
in a case that the first specific value is the second value, the second specific value is any one of the second value, the third value, or the fourth value;
in a case that the first specific value is the third value, the second specific value is any one of the third value or the fourth value; or
in a case that the first specific value is the fourth value, the second specific value is the fourth value.

17. The method according to any one of claims 5 to 13, wherein for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of the first codeword, a mapping relationship exists between values corresponding to ports in a second port group of a second layer of the specific 8-port partial coherent codeword and values corresponding to ports of a first layer of the third codeword, and a mapping relationship exists between values corresponding to ports in a second port group of a third layer of the specific 8-port partial coherent codeword and values corresponding to ports of a second layer of the third codeword; or

for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of a first layer of the third codeword, a mapping relationship exists between values corresponding to ports in a first port group of a second layer of the specific 8-port partial coherent codeword and values corresponding to ports of a second layer of the third codeword, and a mapping relationship exists between values corresponding to ports in a second port group of a third layer of the specific 8-port partial coherent codeword and values corresponding to ports of the first codeword;
wherein the first codeword is a codeword with 4 antenna ports, 1 transmission layer, and a transmit precoding matrix indicator (TPMI) being a first specific value, the first specific value is at least one of 12 to 27; the third codeword is a codeword with 4 antenna ports, 2 transmission layers, and a TPMI being a third specific value, the third specific value comprises at least one of 14 to 21;
the first port group is {0, 1, 4, 5}, and the second port group is {2, 3, 6, 7}.

18. The method according to claim 17, wherein

the first specific value is any one of a first value, a second value, a third value, or a fourth value;

the first value is any one of 12, 16, 20, or 24;
the second value is any one of 13, 17, 21, or 25;
the third value is any one of 14, 18, 22, or 26; and
the fourth value is any one of 15, 19, 23, or 27;
the third specific value is any one of a fifth value or a sixth value;
the fifth value is any one of 14, 16, 18, or 20; and
the sixth value is any one of 15, 17, 19, or 21.

19. A method for indicating a codebook, performed by a network device, comprising:
determining a codebook for a terminal, wherein at least one codeword in the codebook supports full-power uplink transmission by the terminal, and the terminal supports 8-port partial coherent transmission.

20. The method according to claim 19, further comprising:
sending indication information to the terminal, wherein the indication information indicates the codebook.

21. The method according to claim 19 or 20, wherein the terminal supports 8-port partial coherent transmission with 2 antenna port groups and 1 transmission layer, and/or 8-port partial coherent transmission with 4 antenna port groups and any one of 1 to 3 transmission layers.

22. The method according to any one of claims 19 to 21, further comprising:
receiving capability information sent from the terminal, wherein the capability information indicates that the terminal supports the 8-port partial coherent transmission with 2 antenna port groups and 1 transmission layer, and/or the 8-port partial coherent transmission with 4 antenna port groups and any one of 1 to 3 transmission layers.

23. The method according to any one of claims 19 to 22, wherein determining the codebook for the terminal comprises at least one of:

determining that the codebook is an 8-port partial coherent codebook with 2 antenna port groups and 1 transmission layer to which all 8-port fully coherent codewords with 1 transmission layer are added, wherein the terminal supports 8-port partial coherent transmission with 2 antenna port groups and 1 transmission layer;
determining that the codebook is an 8-port partial coherent codebook with 4 antenna port groups and 1 transmission layer to which all the 8-port fully coherent codewords with 1 transmission layer are added, wherein the terminal supports 8-port partial coherent transmission with 4 antenna port groups and 1 transmission layer;
determining that the codebook is an 8-port partial coherent codebook with 4 antenna port groups and 2 transmission layers to which all 8-port fully coherent codewords with 2 transmission layers are added, wherein the terminal supports 8-port partial coherent transmission with 4 antenna port groups and 2 transmission layers;
determining that the codebook is an 8-port partial coherent codebook with 4 antenna port groups and 3 transmission layers to which all 8-port fully coherent codewords with 3 transmission layers are added, wherein the terminal supports 8-port partial coherent transmission with 4 antenna port groups and 3 transmission layers;
determining that the codebook is an 8-port partial coherent codebook with 2 antenna port groups and 1 transmission layer to which a first specific 8-port fully coherent codeword with 1 transmission layer is added, wherein the terminal supports the 8-port partial coherent transmission with 2 antenna port groups and 1 transmission layer;
determining that the codebook is an 8-port partial coherent codebook with 4 antenna port groups and 1 transmission layer to which a second specific 8-port fully coherent codeword with 1 transmission layer is added, wherein the terminal supports the 8-port partial coherent transmission with 4 antenna port groups and 1 transmission layer;
determining that the codebook is an 8-port partial coherent codebook with 4 antenna port groups and 2 transmission layers to which a second specific 8-port fully coherent codeword with 2 transmission layers is added, wherein the terminal supports the 8-port partial coherent transmission with 4 antenna port groups and 2 transmission layers;
determining that the codebook is an 8-port partial coherent codebook with 4 antenna port groups and 3 transmission layers to which a second specific 8-port fully coherent codeword with 3 transmission layers is added, wherein the terminal supports the 8-port partial coherent transmission with 4 antenna port groups and 3 transmission layers;
determining that the codebook is an 8-port partial coherent codebook with 4 antenna port groups and 2 transmission layers to which all 8-port partial coherent codewords with 2 transmission layers and 2 antenna port groups are added, wherein the terminal supports the 8-port partial coherent transmission with 4 antenna port groups and 2 transmission layers;

determining that the codebook is an 8-port partial coherent codebook with 4 antenna port groups and 3 transmission layers to which all 8-port partial coherent codewords with 3 transmission layers and 2 antenna port groups are added, wherein the terminal supports the 8-port partial coherent transmission with 4 antenna port groups and 3 transmission layers;

determining that the codebook is an 8-port partial coherent codebook with 4 antenna port groups and 2 transmission layers to which a specific 8-port partial coherent codeword with 2 transmission layers and 2 antenna port groups is added, wherein the terminal supports the 8-port partial coherent transmission with 4 antenna port groups and 2 transmission layers; or

determining that the codebook is an 8-port partial coherent codebook with 4 antenna port groups and 3 transmission layers to which a specific 8-port partial coherent codeword with 3 transmission layers and 2 antenna port groups is added, wherein the terminal supports the 8-port partial coherent transmission with 4 antenna port groups and 3 transmission layers.

24. The method according to any one of claims 19 to 23, wherein the codebook comprises at least one of:

an 8-port partial coherent codebook with 1 transmission layer and 2 antenna port groups, and all 8-port fully coherent codewords with 1 transmission layer, wherein the terminal supports 8-port partial coherent transmission with 1 transmission layer and 2 antenna port groups;

an 8-port partial coherent codebook with 1 transmission layer and 4 antenna port groups, and all 8-port fully coherent codewords with 1 transmission layer, wherein the terminal supports 8-port partial coherent transmission with 1 transmission layer and 4 antenna port groups;

an 8-port partial coherent codebook with 2 transmission layers and 4 antenna port groups, and all 8-port fully coherent codewords with 2 transmission layers, wherein the terminal supports 8-port partial coherent transmission with 2 transmission layers and 4 antenna port groups;

an 8-port partial coherent codebook with 3 transmission layers and 4 antenna port groups, and all 8-port fully coherent codewords with 3 transmission layers, wherein the terminal supports 8-port partial coherent transmission with 3 transmission layers and 4 antenna port groups;

an 8-port partial coherent codebook with 1 transmission layer and 2 antenna port groups, and a first specific 8-port fully coherent codeword with 1 transmission layer, wherein the terminal supports the 8-port partial coherent transmission with 1 transmission layer and 2 antenna port groups;

an 8-port partial coherent codebook with 1 transmission layer and 4 antenna port groups, and a second specific 8-port fully coherent codeword with 1 transmission layer, wherein the terminal supports the 8-port partial coherent transmission with 1 transmission layer and 4 antenna port groups;

an 8-port partial coherent codebook with 2 transmission layers and 4 antenna port groups, and a second specific 8-port fully coherent codeword with 2 transmission layers, wherein the terminal supports the 8-port partial coherent transmission with 2 transmission layers and 4 antenna port groups;

an 8-port partial coherent codebook with 3 transmission layers and 4 antenna port groups, and a second specific 8-port fully coherent codeword with 3 transmission layers, wherein the terminal supports the 8-port partial coherent transmission with 3 transmission layers and 4 antenna port groups;

an 8-port partial coherent codebook with 2 transmission layers and 4 antenna port groups, and all 8-port partial coherent codewords with 2 transmission layers and 2 antenna port groups, wherein the terminal supports the 8-port partial coherent transmission with 2 transmission layers and 4 antenna port groups;

an 8-port partial coherent codebook with 3 transmission layers and 4 antenna port groups, and all 8-port partial coherent codewords with 3 transmission layers and 2 antenna port groups, wherein the terminal supports the 8-port partial coherent transmission with 3 transmission layers and 4 antenna port groups;

an 8-port partial coherent codebook with 2 transmission layers and 4 antenna port groups, and a specific 8-port partial coherent codeword with 2 transmission layers and 2 antenna port groups, wherein the terminal supports the 8-port partial coherent transmission with 2 transmission layers and 4 antenna port groups; or

an 8-port partial coherent codebook with 3 transmission layers and 4 antenna port groups, and a specific 8-port partial coherent codeword with 3 transmission layers and 2 antenna port groups, wherein the terminal supports the 8-port partial coherent transmission with 3 transmission layers and 4 antenna port groups.

25. The method according to claim 23 or 24, wherein for 1 transmission layer and an antenna configuration of the terminal being a first configuration, the first specific 8-port fully coherent codeword comprises at least one of:

a codeword determined when a first parameter, a second parameter, and a third parameter are all 0;

a codeword determined when a first parameter is 1, and a second parameter and a third parameter are all 0;

a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
wherein the first configuration is that, in one polarization direction, an antenna port count in a horizontal dimension is 4 and an antenna port count in a vertical dimension is 1; and
the first parameter indicates a beam index selected in the horizontal dimension, the second parameter indicates a beam index selected in the vertical dimension, and the third parameter indicates a co-phasing coefficient between two polarization directions.

26. The method according to claim 23 or 24, wherein for 1 transmission layer and an antenna configuration of the terminal being a second configuration, the first specific 8-port fully coherent codeword comprises at least one of:

a codeword determined when a first parameter, a second parameter, and a third parameter are all 0;
a codeword determined when a first parameter is 1, and a second parameter and a third parameter are all 0;
a codeword determined when a first parameter and a second parameter are all 0, and a third parameter is 1;
a codeword determined when a first parameter and a second parameter are all 0, and a third parameter is 2;
a codeword determined when a first parameter and a second parameter are all 0, and a third parameter is 3;
a codeword determined when a first parameter is 1, a second parameter is 0, and a third parameter is 1;
a codeword determined when a first parameter is 1, a second parameter is 0, and a third parameter is 2; or
a codeword determined when a first parameter is 1, a second parameter is 0, and a third parameter is 3,
wherein the second configuration is that, in one polarization direction, an antenna port count in a horizontal dimension is 2 and an antenna port count in a vertical dimension is 2; and
the first parameter indicates a beam index selected in the horizontal dimension, the second parameter indicates a beam index selected in the vertical dimension, and the third parameter indicates a co-phasing coefficient between two polarization directions.

27. The method according to any one of claims 23 to 26, wherein for 1 transmission layer and an antenna configuration of the terminal being a first configuration, the second specific 8-port fully coherent codeword comprises at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3,
wherein the first configuration is that, in one polarization direction, an antenna port count in a horizontal dimension is 4 and an antenna port count in a vertical dimension is 1; and
the first parameter indicates a beam index selected in the horizontal dimension, the second parameter indicates a beam index selected in the vertical dimension, and the third parameter indicates a co-phasing coefficient between two polarization directions.

28. The method according to any one of claims 23 to 26, wherein for 1 transmission layer and an antenna configuration of the terminal being a second configuration, the second specific 8-port fully coherent codeword comprises at least one of:

a codeword determined when a first parameter, a second parameter, and a third parameter are all 0;
a codeword determined when the first parameter and the second parameter are all 0, and the third parameter is 1;
a codeword determined when the first parameter and the second parameter are all 0, and the third parameter is 2; or
a codeword determined when the first parameter and the second parameter are all 0, and the third parameter is 3,
wherein the second configuration is that, in one polarization direction, an antenna port count in a horizontal dimension is 2 and an antenna port count in a vertical dimension is 2; and
the first parameter indicates a beam index selected in the horizontal dimension, the second parameter indicates a beam index selected in the vertical dimension, and the third parameter indicates a co-phasing coefficient between two polarization directions.

29. The method according to any one of claims 23 to 28, wherein for 2 transmission layers, the second specific 8-port fully coherent codeword comprises at least one of:

a codeword determined when a first parameter, a second parameter, a third parameter, and a fourth parameter are all 0; or
a codeword determined when the first parameter, the second parameter, and the fourth parameter are all 0, and the third parameter is 1,
wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

30. The method according to any one of claims 23 to 29, wherein for 3 transmission layers, the second specific 8-port fully coherent codeword comprises at least one of:

a codeword determined when a first parameter, a second parameter, a third parameter, and a fourth parameter are all 0; or
a codeword determined when the first parameter, the second parameter, and the fourth parameter are all 0, and the third parameter is 1,
wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

31. The method according to any one of claims 23 to 29, wherein for 3 transmission layers, the second specific 8-port fully coherent codeword comprises at least one of:

a codeword determined when a first parameter, a second parameter, and a third parameter are all 0, and a fourth parameter is 1; or
a codeword determined when the first parameter and the second parameter are all 0, and the third parameter and the fourth parameter are all 1,
wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index.

32. The method according to any one of claims 23 to 31, wherein for 2 transmission layers, the specific 8-port partial coherent codeword is related to a first codeword and a second codeword, a mapping relationship exists between values corresponding to ports in a first port group of a first layer of the specific 8-port partial coherent codeword and values corresponding to ports of the first codeword, and a mapping relationship exists between values corresponding to ports in a second port group of a second layer of the specific 8-port partial coherent codeword and values corresponding to ports of the second codeword;

wherein the first codeword is a codeword with 4 antenna ports, 1 transmission layer, and a transmit precoding matrix indicator (TPMI) being a first specific value, the first specific value is at least one of 12 to 27; and the second codeword is a codeword with 4 antenna ports, 1 transmission layer, and a TPMI being a second specific value, the second specific value is at least one of 12 to 27;
the first port group is {0, 1, 4, 5}, and the second port group is {2, 3, 6, 7}.

33. The method according to claim 32, wherein

the first specific value is any one of a first value, a second value, a third value, or a fourth value; the second specific value is any one of the first value, the second value, the third value, or the fourth value;
the first value is any one of 12, 16, 20, or 24;
the second value is any one of 13, 17, 21, or 25;
the third value is any one of 14, 18, 22, or 26; and
the fourth value is any one of 15, 19, 23, or 27.

34. The method according to claim 33, wherein

in a case that the first specific value is the first value, the second specific value is any one of the first value, the second value, the third value, or the fourth value;

in a case that the first specific value is the second value, the second specific value is any one of the second value, the third value, or the fourth value;

in a case that the first specific value is the third value, the second specific value is any one of the third value or the fourth value; or

in a case that the first specific value is the fourth value, the second specific value is the fourth value.

35. The method according to any one of claims 23 to 31, wherein for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of the first codeword, a mapping relationship exists between values corresponding to ports in a second port group of a second layer of the specific 8-port partial coherent codeword and values corresponding to ports of a first layer of the third codeword, and a mapping relationship exists between values corresponding to ports in the second port group of a third layer of the specific 8-port partial coherent codeword and values corresponding to ports of a second layer of the third codeword; or

for 3 transmission layers, the specific 8-port partial coherent codeword is related to a first codeword and a third codeword, a mapping relationship exists between values corresponding to ports in a first port group of a first layer of the specific 8-port partial coherent codeword and values corresponding to ports of a first layer of the third codeword, a mapping relationship exists between values corresponding to ports in a first port group of a second layer of the specific 8-port partial coherent codeword and values corresponding to ports of a second layer of the third codeword, and a mapping relationship exists between values corresponding to ports in a second port group of a third layer of the specific 8-port partial coherent codeword and values corresponding to ports of the first codeword;

wherein the first codeword is a codeword with 4 antenna ports, 1 transmission layer, and a TPMI being a first specific value, the first specific value is at least one of 12 to 27; the third codeword is a codeword with 4 antenna ports, 2 transmission layers, and a TPMI being a third specific value, the third specific value comprises at least one of 14 to 21;

the first port group is {0, 1, 4, 5}, and the second port group is {2, 3, 6, 7}.

36. The method according to claim 35, wherein

the first specific value is any one of a first value, a second value, a third value, or a fourth value;

the first value is any one of 12, 16, 20, or 24;

the second value is any one of 13, 17, 21, or 25;

the third value is any one of 14, 18, 22, or 26; and

the fourth value is any one of 15, 19, 23, or 27;

the third specific value is any one of a fifth value or a sixth value;

the fifth value is any one of 14, 16, 18, or 20; and

the sixth value is any one of 15, 17, 19, or 21.

37. A method for indicating a codebook, comprising:

determining, by a network device, a codebook for a terminal; and

determining, by a terminal, a codebook, wherein at least one codeword in the codebook supports full-power uplink transmission by the terminal, and the terminal supports 8-port partial coherent transmission.

38. A terminal, comprising:

a processing module, configured to determine a codebook, wherein at least one codeword in the codebook supports full-power uplink transmission by the terminal, and the terminal supports 8-port partial coherent transmission.

39. A network device, comprising:

a processing module, configured to determine a codebook for a terminal, wherein at least one codeword in the codebook supports full-power uplink transmission by the terminal, and the terminal supports 8-port partial coherent transmission.

40. A terminal, comprising:

one or more processors;
wherein the terminal is configured to perform the method according to any one of claims 1 to 18.

41. A network device, comprising:

   one or more processors;
   wherein the network device is configured to perform the method according to any one of claims 19 to 36.

42. A communication system, comprising:
   a terminal, configured to perform the method according to any one of claims 1 to 18, and a network device, configured to perform the method according to any one of claims 19 to 36.

43. A storage medium, storing instructions which, when executed on a communication device, cause the communication device to perform the method according to any one of claims 1 to 18 or the method according to any one of claims 19 to 36.

FIG. 1

Ng=2

Ng=4

FIG. 2

FIG. 3

determining a codebook | S401A

FIG. 4A

sending, by a terminal, capability information to a network device, wherein the capability information indicates that the terminal supports 8-port partial coherent transmission with 2 antenna port groups and 1 transmission layer, and/or 8-port partial coherent transmission with 4 antenna port groups and any one of 1 to 3 transmission layers    S401B

receiving, by the terminal, indication information sent by the network device, wherein the indication information indicates a codebook configured by the network device for the terminal, and at least one codeword in the codebook supports full-power uplink transmission by the terminal    S402B

FIG. 4B

determining a codebook    S501A

sending the codebook    S502A

FIG. 5A

receiving capability information sent by a terminal    S501B

determining a codebook for the terminal, wherein at least one codeword in the codebook supports full-power uplink transmission by the terminal    S502B

sending the codebook    S503B

FIG. 5B

10

terminal 11

transceiver module

12

processing module

FIG. 6A

20

network device 21

transceiver module

22

processing module

FIG. 6B

8100

8101

processor

8102

memory

8103

transceiver

8104

interface circuit

FIG. 7A

8200

8201

processor

8202

interface circuit

8203

memory

FIG. 7B

## INTERNATIONAL SEARCH REPORT

| International application No. |
| --- |
| **PCT/CN2023/111108** |

**A. CLASSIFICATION OF SUBJECT MATTER**

H04B7/0456(2017.01)i; H04W52/04(2009.01)i

According to International Patent Classification (IPC) or to both national classification and IPC

**B. FIELDS SEARCHED**

Minimum documentation searched (classification system followed by classification symbols)

IPC:H04L,H04B,H04W

Documentation searched other than minimum documentation to the extent that such documents are included in the fields searched

Electronic data base consulted during the international search (name of data base and, where practicable, search terms used)

3GPP, CNTXT, ENTXTC: 部分, 端口, 功率, 码本, 码字, 满功率, 全功率, 相干, 8, codebook, codeword, coherent, full, partial, power, port

**C. DOCUMENTS CONSIDERED TO BE RELEVANT**

| Category* | Citation of document, with indication, where appropriate, of the relevant passages | Relevant to claim No. |
| --- | --- | --- |
| X | US 2023148388 A1 (SAMSUNG ELECTRONICS CO., LTD.) 11 May 2023 (2023-05-11) description, paragraphs 10 and 41-253 | 1-43 |
| X | VIVO. "Further Discussion on enabling 8 TX UL Transmission" *3GPP TSG RAN WG1 #113 R1-2304469*, 26 May 2023 (2023-05-26), section 2 | 1-43 |
| A | CN 111510269 A (HUAWEI TECHNOLOGIES CO., LTD.) 07 August 2020 (2020-08-07) entire document | 1-43 |
| A | CN 111867091 A (DATANG MOBILE COMMUNICATIONS EQUIPMENT CO., LTD.) 30 October 2020 (2020-10-30) entire document | 1-43 |
| A | CN 112752334 A (CHINA MOBILE COMMUNICATION LTD., RESEARCH INSTITUTE et al.) 04 May 2021 (2021-05-04) entire document | 1-43 |
| A | CN 115997350 A (BEIJING XIAOMI MOBILE SOFTWARE CO., LTD.) 21 April 2023 (2023-04-21) entire document | 1-43 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 April 2024** | **24 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/111108**

| Patent document cited in search report | | | Publication date (day/month/year) | Patent family member(s) | | | Publication date (day/month/year) |
|---|---|---|---|---|---|---|---|
| US | 2023148388 | A1 | 11 May 2023 | WO | 2023048469 | A1 | 30 March 2023 |
| CN | 111510269 | A | 07 August 2020 | US | 2021352596 | A1 | 11 November 2021 |
| | | | | EP | 3905541 | A1 | 03 November 2021 |
| | | | | WO | 2020143805 | A1 | 16 July 2020 |
| | | | | IN | 202137033032 | A | 20 August 2021 |
| | | | | CN | 113630230 | A | 09 November 2021 |
| | | | | CN | 113660073 | A | 16 November 2021 |
| CN | 111867091 | A | 30 October 2020 | WO | 2020221108 | A1 | 05 November 2020 |
| | | | | KR | 20210154255 | A | 20 December 2021 |
| | | | | VN | 84410 | A | 25 February 2022 |
| | | | | EP | 3965498 | A1 | 09 March 2022 |
| | | | | US | 2022217646 | A1 | 07 July 2022 |
| | | | | CN | 116567833 | A | 08 August 2023 |
| CN | 112752334 | A | 04 May 2021 | None | | | |
| CN | 115997350 | A | 21 April 2023 | None | | | |

Form PCT/ISA/210 (patent family annex) (July 2022)